(19) **Europäisches Patentamt / European Patent Office / Office européen des brevets**

(11) **EP 1 532 550 B1**

(12) **FASCICULE DE BREVET EUROPEEN**

(45) Date de publication et mention de la délivrance du brevet:
**18.04.2012 Bulletin 2012/16**

(51) Int Cl.:
**G06K 9/64** (2006.01)    **G06F 17/30** (2006.01)

(21) Numéro de dépôt: **03769614.3**

(86) Numéro de dépôt international:
**PCT/FR2003/050024**

(22) Date de dépôt: **04.08.2003**

(87) Numéro de publication internationale:
**WO 2004/015590 (19.02.2004 Gazette 2004/08)**

(54) **DETECTION D'UNE IMAGE DE REFERENCE ROBUSTE A DE GRANDES TRANSFORMATIONS PHOTOMETRIQUES**

GEGEN GROSSE PHOTOMETRISCHE UMWANDLUNGEN ROBUSTE ERKENNUNG EINES REFERENZBILDES

ROBUST DETECTION OF A REFERENCE IMAGE DURING MAJOR PHOTOMETRIC TRANSFORMATIONS

(84) Etats contractants désignés:
**AT BE BG CH CY CZ DE DK EE ES FI FR GB GR HU IE IT LI LU MC NL PT RO SE SI SK TR**

(30) Priorité: **05.08.2002 FR 0209941**

(43) Date de publication de la demande:
**25.05.2005 Bulletin 2005/21**

(73) Titulaire: **LTU Technologies**
**75002 Paris (FR)**

(72) Inventeurs:
- **GILLES, Sébastien**
  **F-75011 Paris (FR)**
- **WINTER, Alexandre**
  **F-75010 Paris (FR)**
- **POIRIER, Nathalie**
  **F-75007 Paris (FR)**

(74) Mandataire: **Grynwald, Albert et al**
**SCHMIT CHRETIEN**
**16, rue de la Paix**
**75002 Paris (FR)**

(56) Documents cités:
**EP-A- 0 878 767**

- **WINTER A ET AL: "Entropy and multiscale analysis: a new feature extraction algorithm for aerial images" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 avril 1997 (1997-04-21), pages 2765-2768, XP010225729 ISBN: 0-8186-7919-0**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Préambule de la description

*Domaine concerné, problème posé*

La présente invention concerne un procédé et un système pour identifier une image déterminée et/ou une séquence audiovisuelle déterminée dans un flux quelconque d'images ou de séquences audiovisuelles, notamment dans la perspective de pouvoir identifier une image propriétaire dans le flux et/ou de pouvoir identifier, de préférence en temps réel, plusieurs séquences audiovisuelles propriétaires dans le flux.

On connaît le document EP0878767 qui décrit un système et procédé de détection de séquences audiovisuelles déterminées dans des séquences vidéo quelconques. Des caractéristiques (par exemple la moyenne des couleurs) sont extraites du contenu de chaque image de la séquence déterminée sous forme d'un vecteur puis stockées dans une mémoire comme index de référence. Les caractéristiques correspondantes de la séquence courante sont extraltes de la même manière afin de former un index courant, lui-même comparé aux indices de référence en temps réel, ce qui permet la détection.

Dans le domaine de la surveillance de contenus audiovisuel protégés, l'un des problèmes concerne l'identification d'une séquence vidéo propriétaire lors de sa diffusion. Une séquence vidéo étant une suite d'images, la révolution du problème implique de pouvoir détecter et identifier une image particulière (appelée image de référence) en temps réel, tout en étant robuste à un certain nombre de transformations photométriques qui peuvent affecter l'image lors de sa diffusion.

La solution à ce problème :

- doit être robuste à de petites différences de caractéristiques,

- doit permettre une rapidité des calculs,
- doit avoir un fort pouvoir discriminant.

*Solution*

### Le procédé selon l'invention

Le procédé comprend l'étape de calculer, pour chaque image, un index se présentant sous la forme d'un ensemble ordonné et fini de valeurs, notamment sous la forme d'un vecteur caractéristique, codant le contenu de l'image. Le processus de calcul d'index est ci-après dénommé le processus d'indexation.

Le procédé comprend les étapes suivantes mettant en oeuvre le processus d'indexation :

- l'étape de calculer un index de référence, en mettant en oeuvre le processus d'indexation pour l'image déterminée, ou
- l'étape d'extraire des index de référence de la séquence audiovisuelle déterminée, de manière à composer un ensemble de référence d'index de référence.

On obtient ainsi des index de référence caractéristiques de l'image déterminée et/ou de la séquence audiovisuelle déterminée.

Le procédé comprend en outre l'étape de calculer un index, pour des images courantes du flux, en mettant en oeuvre le processus d'indexation pour les images courantes du flux. L'index ainsi calculé est ci-après dénommé l'index courant.

Le procédé comprend l'étape de comparer les index de référence avec l'index courant de l'image courante du flux observé. Il est ainsi possible de détecter dans un flux une image déterminée avec une très grande précision, de manière extrêmement rapide, tout en étant robuste à de très fortes altérations photométriques.

### Processus d'indexation

De préférence, selon l'invention le procédé est tel que, pour calculer un index d'une image, notamment un index de référence et/ou un index courant, il comprend l'étape de ré-échantillonner l'image en une image aux dimensions fixées par avance. L'image ré-échantillonnée est ci-après dénommée l'image normalisée.

Le procédé comprend en outre, dans le cas où l'image est une image couleur comportant des niveaux de couleurs, l'étape de convertir au préalable les niveaux de couleurs de l'image à ré-échantillonner en niveaux de gris.

L'image normalisée est représentée par une matrice des valeurs des pixels, après quantification discrète des valeurs de pixel.

Le procédé comprend en outre l'étape de ranger les valeurs selon un ordre de parcours prédéterminé des positions dans la matrice, notamment en concaténant les valeurs de chaque ligne de la matrice sous la forme d'un vecteur caractéristique. Ce vecteur compose l'index.

Selon l'invention le procédé comprend en outre l'étape de calculer l'entropie discrète de la' distribution des valeurs de l'index de.référence ou de l'index courant. L'entropie est ci-après dénommée l'entropie marginale de référence ou l'entropie marginale courante.

En procédant ainsi on optimise le temps de comparaison.

L'index peut être complété avec la valeur d'entropie marginale.

## Calcul d'une distance de comparaison d'index

Selon l'invention, les index se présentent sous la forme d'ensembles ordonnés et finis de valeurs. Ces valeurs sont identifiées, dans l'index de référence et l'index courant, par un système de coordonnées.

Le procédé comprend en outre l'étape de définir, pour une coordonnée donnée du système de coordonnées, un couple de valeurs :

- dont la première valeur est la valeur figurant dans l'index de référence associée à la coordonnée donnée, et
- dont la deuxième valeur est la valeur figurant dans l'index courant associé à la coordonnée donnée.

Le procédé comprend en outre l'étape de calculer l'histogramme bi-dimensionnel des couples de valeurs obtenus pour toutes les coordonnées du système de coordonnées de l'index de référence et de l'index courant.

Le procédé comprend en outre l'étape de calculer l'entropie discrète de dudit histogramme bi-dimensionnel, ci-après dénommée l'entropie de l'histogramme bi-dimensionnel.

Le procédé comprend en outre l'étape de calculer une distance de comparaison entre un index de référence et un index courant en formant le rapport entre, au numérateur la somme de l'entropie marginale de référence et de l'entropie marginale courante diminuée de l'entropie de l'histogramme bi-dimensionnel, et au dénominateur la somme de l'entropie marginale de référence et de l'entropie marginale courante.

## Extraction d'index de référence

De préférence selon l'invention, le procédé est tel que, pour extraire de la séquence audiovisuelle déterminée les index de référence de la séquence audiovisuelle déterminée, il comprend en outre l'étape d'initialiser un ensemble de référence contenant les index de référence des images déterminées. Cet ensemble est initialisé avec l'index de référence de la première image déterminée de la séquence audiovisuelle déterminée. L'index de référence de la première image déterminée de la séquence audiovisuelle déterminée constitue le premier index de référence de l'ensemble de référence.

Le procédé comprend en outre :

- (a) l'étape de calculer, pour chaque image déterminée de la séquence audiovisuelle déterminée, un index temporaire courant et de calculer une distance de comparaison entre l'index temporaire courant et le dernier index de référence ajouté au ensemble de référence,
- (b) l'étape de comparer, à un seuil prédéterminé SE, la distance de comparaison entre l'index temporaire courant et le dernier index de référence ajouté à l'ensemble de référence,
- (c) l'étape d'ajouter l'index temporaire courant à l'ensemble de référence, si la distance de comparaison dépasse le seuil prédéterminé SE.

L'index temporaire courant devient le dernier index de référence de l'ensemble de référence.

Le procédé comprend en outre l'étape d'itérer les étapes (a) à (c) jusqu'à la fin de la séquence audiovisuelle déterminée.

## Détection

De préférence selon l'invention, le procédé est tel que, pour comparer les index de référence avec l'index courant de l'image courante du flux observé, il comprend en outre l'étape de comparer la distance de comparaison à un seuil prédéterminé SF. De telle sorte que l'image déterminée est détectée dans un flux quelconque d'images lorsque la distance de comparaison entre l'index de référence de l'image déterminée et l'index courant est inférieure au seuil prédéterminé SF.

Selon une autre variante de réalisation de l'invention, le procédé est plus particulièrement conçu pour détecter une séquence audiovisuelle déterminée dans un flux quelconque de séquences audiovisuelles. De préférence dans le cas de cette variante de réalisation, le procédé comprend :

- (a) l'étape d'initialiser une variable T à - 1 et d'initialiser une variable D à 0,
- (b) l'étape de calculer, pour chaque index de référence de l'ensemble de référence, la distance de comparaison entre l'index de référence de l'ensemble de référence et l'index courant.

Si la distance de comparaison ainsi calculée est inférieure à un seuil prédéterminé SD la variable D est incrémentée de un. Cette condition est ci-après dénommée la condition de détection d'index de référence.

L'instant auquel le premier index de référence de l'ensemble de référence de la séquence audiovisuelle déterminée satisfait la condition de détection est ci-dessous dénommé l'instant de la première détection.

Le procédé comprend en outre les étapes suivantes :

- (c) l'étape d'assigner à la variable T le temps écoulé depuis l'instant de la première détection si la variable D est différente de zéro,
- (d) l'étape d'itérer l'étape (b) jusqu'à ce que la variable D atteigne le seuil prédéterminé SD, ou d'itérer l'étape (a) si la variable T dépasse un seuil prédéterminé ST,
- (e) l'étape de détecter la séquence audiovisuelle déterminée si la variable D atteint le seuil prédéterminé SD.

**Le système selon l'invention**

Le système comprend :

- des premiers moyens de calcul pour calculer un index de référence pour l'image déterminée, en mettant en oeuvre un processus d'indexation, ou
- des premiers moyens d'analyse informatique pour extraire des index de référence de la séquence audiovisuelle déterminée, de manière à composer un ensemble de référence d'index de référence.

L'index de référence se présente sous la forme d'un ensemble ordonné et fini de valeurs, notamment sous la forme d'un vecteur caractéristique, codant le contenu de l'image déterminée. Il résulte de la combinaison des traits techniques que l'on obtient ainsi un index de référence caractéristique de l'image déterminée et/ou de la séquence audiovisuelle déterminée. Le système comprend :

- des moyens de réception pour recevoir le flux d'images ou de séquences audiovisuelles comportant au moins une image déterminée et/ou au moins une séquence audiovisuelle déterminée,
- des moyens de traitement informatique pour numériser le flux d'images ou de séquences audiovisuelles.

Le système comprend en outre des seconds moyens de calcul pour calculer un index courant pour des images courantes du flux, en mettant en oeuvre le processus d'indexation pour les images courantes du flux. L'index courant se présente sous la forme d'un ensemble ordonné et fini de valeurs, notamment sous la forme d'un vecteur caractéristique, codant le contenu de l'image courante. Le système comprend en outre des moyens de comparaison pour comparer l'index de référence de l'image déterminée avec l'index courant de l'image courante du flux observé. Il résulte de la combinaison des traits techniques que le système permet de détecter dans un flux une image déterminée avec une très grande précision, de manière extrêmement rapide, tout en étant robuste à de très fortes altérations photométriques.

**Processus d'indexation**

De préférence selon l'invention, les premiers moyens de calcul pour calculer un index de référence d'une image déterminée comprennent :

- des moyens d'échantillonnage pour ré-échantillonner l'image déterminée en une image déterminée ré-échantillonnée aux dimensions fixées par avance,
- des moyens de quantification discrète des valeurs de pixels de l'image déterminée ré-échantillonnée.

Après quantification discrète, l'image déterminée ré-échantillonnée est représentée par une matrice des valeurs des pixels.

Les premiers moyens de calcul de l'index de référence d'une image déterminée comprennent en outre des moyens d'ordonnancement pour ranger les valeurs des pixels selon un ordre de parcours prédéterminé des positions dans la matrice, notamment en concaténant les valeurs de chaque ligne de la matrice sous la forme d'un vecteur caractéristique. On obtient ainsi l'index de référence.

Le système comprend en outre, dans le cas où l'image déterminée est une image couleur comportant des niveaux de couleurs, des moyens de conversion pour convertir au préalable les niveaux de couleurs de l'image déterminée à ré-échantillonner en niveaux de gris.

Selon l'invention les premiers moyens de calcul comprennent en outre des moyens de traitement référence pour calculer l'entropie discrète de la distribution des valeurs de l'index de référence. Cette entropie est ci-après dénommée l'entropie marginale de référence.

Il est ainsi possible d'optimiser le temps de comparaison. Il est possible de compléter l'index de référence avec cette valeur d'entropie marginale de référence.

De préférence selon l'invention, le système est tel que les seconds moyens de calcul pour calculer un index courant d'une image courante comprennent :

- des moyens d'échantillonnage pour ré échantillonner l'image courante en une image courante aux dimensions fixées par avance,
- des moyens de quantification discrète des valeurs de pixels de l'image courante.

Après quantification discrète, l'image courante ré-échantillonnée est représentée par une matrice des valeurs des pixels.

Les seconds moyens de calcul pour calculer un index courant d'une image courante comprennent en outre des moyens d'ordonnancement pour ranger les valeurs des pixels selon un ordre de parcours prédéterminé des positions dans la matrice, notamment en concaténant les valeurs de chaque ligne de la matrice sous la forme d'un vecteur caractéristique. On obtient ainsi l'index courant.

Le système comprend en outre, dans le cas où l'image courante est une image couleur comportant des niveaux de couleurs, des moyens de conversion pour convertir au préalable les niveaux de couleurs de l'image courante à ré-échantillonner en niveaux de gris.

Selon l'invention, les seconds moyens de calcul comprennent en outre des moyens de traitement courant pour calculer l'entropie discrète de la distribution des valeurs de l'index courant. Cette entropie est ci-après dénommée l'entropie marginale courante.

Il est ainsi possible d'optimiser le temps de comparaison. Il est possible de compléter l'index courant avec cette valeur d'entropie marginale courante.

**Calcul d'une distance de comparaison d'index**

Selon l'invention, chaque index de référence et chaque index courant se présentent sous la forme d'ensembles ordonnés et finis de valeurs. Ces valeurs sont identifiées, dans l'index de référence et l'index courant, par un système de coordonnées. Le système est tel qu'il comprend en outre des troisièmes moyens de calcul pour définir, pour une coordonnée donnée du système de coordonnées, un couple de valeurs dont la première valeur est la valeur figurant dans l'index de référence associée à la coordonnée donnée, et dont la deuxième valeur est la valeur figurant dans l'index courant associée à la coordonnée donnée. Les troisièmes moyens de calcul permettent de calculer l'histogramme bi-dimensionnel des couples de valeurs obtenus pour toutes les coordonnées du système de coordonnées de l'index de référence et de l'index courant.

Les troisièmes moyens de calcul permettent également de calculer l'entropie discrète dudit histogramme bi-dimensionnel, ci-après dénommée l'entropie de l'histogramme bi-dimensionnel.

Les troisièmes moyens de calcul permettent également de calculer une distance de comparaison entre un index de référence et un index courant en formant le rapport entre, au numérateur la somme de l'entropie marginale de référence et de l'entropie marginale courante diminuée de l'entropie de l'histogramme bi-dimensionnel, et au dénominateur la somme de l'entropie marginale de référence et de l'entropie marginale courante.

**Extraction d'index de référence**

De préférence selon l'invention, le système est tel que, pour extraire de la séquence audiovisuelle déterminée, composée d'images déterminées, les index de référence de la séquence audiovisuelle déterminée, il comprend en outre des quatrièmes moyens de calcul. Ces quatrièmes moyens de calcul mettent en oeuvre un algorithme de calcul comportant une étape d'initialisation d'un ensemble de référence contenant les index de référence des images déterminées. L'ensemble de référence est initialisé avec l'index de référence de la première image déterminée de la séquence audiovisuelle déterminée. L'index de référence de la première image déterminée de la séquence audiovisuelle déterminée constitue le premier index de référence de l'ensemble de référence. L'algorithme de calcul comporte en outre :

- (a) l'étape de (i) calculer, pour chaque image déterminée de la séquence audiovisuelle déterminée, un index temporaire courant et (ii) de calculer une distance de comparaison entre l'index temporaire courant et le dernier index de référence ajouté à l'ensemble de référence,
- (b) l'étape de comparer, à un seuil prédéterminé SE, la distance de comparaison entre l'index temporaire courant et le dernier index de référence ajouté à l'ensemble de référence,
- (c) l'étape d'ajouter l'index temporaire courant à l'ensemble de référence, si la distance de comparaison dépasse le seuil prédéterminé SE.

L'index temporaire courant devient le dernier index de référence de l'ensemble de référence. L'algorithme de calcul comprend en outre l'étape d'itérer les étapes (a) à (c) jusqu'à la fin de la séquence audiovisuelle déterminée.

**Détection**

De préférence selon l'invention, le système est tel que les troisièmes moyens de calcul comparent à un seuil prédéterminé SF la distance de comparaison entre chaque index de référence et l'index courant de l'image courante du flux observé. De telle sorte que l'image déterminée est détectée dans un flux quelconque d'images lorsque la distance de comparaison entre l'index de référence de l'image déterminée et l'index courant est inférieure au seuil prédéterminé SF.

Selon une autre variante de réalisation de l'invention, le système est plus particulièrement conçu pour détecter une séquence audiovisuelle déterminée dans un flux quelconque de séquences audiovisuelles. Dans ce cas, le système comprend des moyens d'initialisation pour charger la valeur - 1 dans un premier registre T, et la valeur 0 dans un second registre D.

Le système comprend en outre dans le cas de cette variante des cinquièmes moyens de calcul pour calculer, pour chaque index de référence de l'ensemble de référence, la distance de comparaison entre l'index de référence de l'ensemble de référence et l'index courant.

Si la distance de comparaison ainsi calculée est inférieure à un seuil prédéterminé SD le second registre D est incrémenté de un. Cette condition est ci-après dénommée la condition de détection d'index de référence.

L'instant auquel le premier index de référence de l'ensemble de référence de la séquence audiovisuelle déterminée satisfait la condition de détection est ci-dessous dénommé l'instant de la première détection.

Les cinquièmes moyens de calcul sont agencés pour charger dans le premier registre T le temps écoulé depuis l'instant de la première détection si la valeur stockée dans le second registre D est différente de zéro. Les cinquièmes moyens de calcul sont agencés (i) pour itérer le calcul de la distance de comparaison jusqu'à ce que la valeur stockée dans le second registre D atteigne le seuil prédéterminé SD, ou (ii) pour itérer la mise en oeuvre des moyens d'initialisation si la valeur stockée dans premier registre T dépasse un seuil prédéterminé ST.

De sorte que la séquence audiovisuelle déterminée est réputée détectée si la valeur stockée du second registre D atteint le seuil prédéterminé SD.

**Précisions mathématiques sur la nature de la fonction de comparaison mise en oeuvre dans la présente invention**

Le procédé faisant l'objet de l'invention permet de détecter des séquences audio-visuelles propriétaires dans un flux vidéo à analyser. Ce procédé s'appuie sur l'existence d'une distance de comparaison permettant de comparer deux images quelconques.

Cette fonction présente la propriété de retourner une valeur faible, proche de 0, lorsque les deux images sont différentes et de retourner une valeur élevée lorsque les deux images sont superposables, même en présence de transformations photométriques significatives entre les deux images, c'est-à-dire modifiant profondément les valeurs des pixels d'une image.

La section 1 définit la fonction utilisée pour la comparaison, et la section 2 montre pourquoi la détection a lieu dans les conditions énoncées, même difficiles.

**1.Information mutuelle entre deux variables aléatoires**

Issus du domaine de la statistique, les concepts ci-après rappelés sont connus et peuvent être retrouvés dans les ouvrages techniques présentant les fondations de la théorie de la communication, par exemple dans Information Theory, par Robert B. Ash,Dover Publications Inc.

**1. 1 Notion d'entropie discrète**

Si **X** est une variable aléatoire prenant des valeurs discrètes **{x_1,...x_n}** avec la distribution de probabilités correspondante **{p_1,...p_n}** (*i.e* **p(X=x_1)=p_1, ..., p(X=x_n)=p_n),** l'entropie discrète de **X** est par définition:

$$\mathbf{H(X)} \;=\; -\textstyle\sum px\_i \mathrm{x log}\, (px\_i)$$

**1. 2 Notion d'entropie jointe discrète**

Si **X** est une variable aléatoire prenant des valeurs discrètes **{x_1,...x_n}** avec la distribution de probabilités correspondante **{px_1,..px_n}** ;
Si **Y** est une variable aléatoire prenant des valeurs discrètes **{y_1,...y_n}** avec la distribution de probabilités correspondante **{py_1,..py_n}** ;
Si la variable aléatoire jointe **Z=(X,Y),** prenant par définition les valeurs discrètes **{(x_1,y_1) ,..., (x_n,y_n)}** munie de la distribution de probabilités correspondante **{pz_11,...pz_nn}**
de telle sorte que **p(X=x_1,Y=y_1)=pz_11, ..., p (X=x n,Y=y_n)=pz_nn,**
alors l'entropie jointe discrète de **Z=(X,Y)** est par définition

$$\mathbf{H(Z)= H(X,Y)} \;=-\textstyle\sum_{i,j} pz\_ij \mathrm{x log}\, (px\_ij)$$

**1. 3 Notion d'entropie conditionnelle discrète**

Si **X** est une variable aléatoire prenant des valeurs discrètes **{x_1,...x_n}** avec la distribution de probabilités correspondante **{px_1,...px_n}** ;
Si **Y** est une variable aléatoire discrète prenant des valeurs **{y_1,..y_n}** avec la distribution de probabilités correspondante **{py_1,** ...py_n} ;
Si la variable aléatoire conditionnelle discrète **W=(X|Y),** se prononçant « **X** sachant **Y** », prenant par définition les valeurs discrètes **{(x_1|y_1) ,..., (x_n|y_n)}** munie de la distribution de probabilités correspondante **{pw_11,..pw_nn},** de telle sorte que **p(X=x_1|Y=y_1)=pw_11, ..., p(X=x_n|Y=y_n)=pw_nn,** alors l'entropie conditionnelle discrète de **W=(X|Y)** est par définition

$$\mathbf{H(Z)= H(X,Y)} \;=-\textstyle\sum_{i,j} pw\_ij \mathrm{x log}\, (pw\_ij)$$

Il est aisément prouvable que **H(X,Y) = H(X|Y) +H (Y)**.

**1. 4 Notion d'information mutuelle**

L'information mutuelle **MI (X,Y)** entre deux variables aléatoires **X** et **Y** est par définition:

$$\mathbf{MI(X,Y)=H(X)+H(Y)-H(X,Y)}$$

$$\mathbf{MI(X,Y)=H(X)-H(X|Y)}$$

$$\mathbf{MI(X,Y)=H(Y)-H(Y|X)}$$

**1. 5 Notion d'information mutuelle normalisée**

L'information mutuelle normalisée **NMI(X,Y)** entre deux variables aléatoires **X** et **Y** est par définition donnée par la formule suivante:

$$NMI(X,Y)=MI(X,Y)/(H(X)+H(Y))$$

La notion de distance de comparaison entrant dans la définition des traits techniques de la présente invention correspond à **NMI**.

**1. 5. 1 Cas des variables indépendantes**

Si **X** et **Y** sont indépendantes, alors par définition **H(X|Y)=H(X),** donc **NMI(X,Y)=0**.

**1. 5. 2 Cas des variables liées fonctionnellement**

Si **Y=f(X),** alors **H(Y|X)=H(f(X)|(X)=0,** car la valeur de la variable aléatoire **f(X)** est entièrement déterminée par la connaissance de **X**. En reportant dans la définition de l'information mutuelle, on obtient la simplification remarquable :

$$MI(X,Y)=H(Y)=H(f(X))$$

Donc,

$$NMI(X,Y)=H(f(X))/(H(X)+H(f(X)))$$

**2. Détection d'images par information mutuelle normalisée**

**2. 1 Images, histogrammes et variables aléatoires**

Le procédé de détection d'images selon l'invention est fondé sur les définitions et propriétés qui viennent d'être exposées.
En effet :

- L'histogramme normalisé des niveaux de gris d'une image **I**, obtenu en calculant l'histogramme des valeurs prises par **I(x)** pour **x** prenant toutes les positions possibles dans l'image, est une distribution de probabilités discrètes permettant par extension de définir « l'entropie d'une image », voir paragraphe 1.1.
- L'histogramme joint normalisé des niveaux de gris de deux images **I1** et **I2** de même dimension, obtenu en calculant l'histogramme bi-dimensionnel des valeurs prises par **(I1(x),I2(x))** pour **x** prenant toutes les positions possibles dans l'image **I1**, est une distribution de probabilités bi-dimensionnelle permettant par extension de définir respectivement « l'entropie jointe entre deux images », « l'entropie conditionnelle entre deux images », « l'information mutuelle entre deux images », « l'information mutuelle normalisée entre deux images », voir respectivement, paragraphes 1.2, 1.3, 1.4 et 1.5

Ainsi, la distance de comparaison utilisée pour procéder a des détections est **NMI(X,Y),** ou **X et Y** sont deux images.

**2. 2 Critère de détection**

Pour détecter une image déterminée, on compare la distance de comparaison **NMI(X,Y)** a un seuil prédéterminé, fixé a l'avance. Si la distance entre l'image courante, candidate à la détection, et l'image de référence est inférieure à ce seuil, l'image courante est déclarée « reconnue » ou détectée.

**2. 3 Robustesse a des transformations photométriques**

En théorie, l'image à détecter est la copie exacte de l'image de référence. Toutefois, en pratique, l'image à détecter a généralement transité par un canal de transmission bruité, ondes hertziennes, récepteur de télévision, satellite, magnétoscope, etc. Ce bruit peut se traduire soit par du bruit haute fréquence dans l'image mais aussi par une déformation basse fréquence du signal, changement du contraste, de la luminosité, saturation, etc.

Il est donc primordial que la technique de détection soit robuste à ces changements photométriques.

La distance **NMI(X,Y)** a l'avantage de ne pas comparer directement les valeurs des pixels de deux images (une approche simple utilisée par exemple dans une distance de corrélation mais inutilisable en pratique en raison de son manque de robustesse). En revanche, la distance **NMI(X,Y)** présente l'avantage de calculer la capacité à prédire la valeur des pixels de **X** connaissant ceux de **Y**, sans hypothèse particulière sur la nature de la transformation photométrique liant **X** et **Y**.

En d'autres termes, la distance **NMI(X,Y)** reste minimale si **X** et **Y** se correspondent géométriquement, même si leurs surfaces d'intensité ne sont pas directement superposables. La détection est donc extrêmement robuste aux changements photométriques.

## Description détaillée

D'autres caractéristiques et avantages de l'invention apparaîtront à la lecture de la description de variantes de réalisation de l'invention données à titre d'exemple indicatif et non limitatif, et de la

- figure 1 qui représente de manière schématique un flux 3 d'image quelconque 6 contenant une image déterminée 11, notamment une image propriétaire 4, qu'il convient de détecter,
- figure 2 qui représente de manière schématique les moyens techniques permettant de calculer un index de référence 10 d'une image déterminée 11,
- figure 3 qui représente de manière schématique la forme sous laquelle peut se présenter un index de référence,
- figure 4 qui représente de manière schématique le processus d'indexation 39 permettant de calculer un index 8, notamment un index courant 14 afin de le comparer à un index de référence 10,
- figure 5 qui représente de manière schématique un flux 3 de séquences audiovisuelles 7 contenant une séquence audiovisuelle déterminée 2, notamment une séquence audiovisuelle propriétaire 4,
- figure 6 qui représente de manière schématique les moyens techniques permettant de calculer à partir d'une séquence audiovisuelle déterminée 2 un ensemble de référence 30 composé d'index de référence 10,
- figure 7 qui représente de manière schématique la forme sous laquelle peut se présenter un index de référence 10 d'un ensemble de référence 30,
- figure 8 qui représente de manière schématique le processus d'indexation 39 permettant de calculer un index 8, notamment un index courant 14 d'une image courante 13 d'une séquence audiovisuelle quelconque 7, afin de le comparer à un index de référence 10,
- figure 9 qui représente de manière schématique une forme de réalisation d'un processus d'indexation d'une image déterminée 11 dans le cas de la première variante de réalisation comme dans le cas de deuxième variante de réalisation,
- figure 10 qui représente de manière schématique une forme de réalisation d'un processus d'indexation d'une image courante 13 dans le cas de la première variante de réalisation comme dans le cas de deuxième variante de réalisation,
- figure 11 qui représente de manière schématique une forme de représentation des couples de valeurs 25, 26 composant un index de référence 21a et d'un index courant 21b,
- figure 12 qui représente de manière schématique les moyens techniques permettant de calculer une distance de comparaison 29,
- figure 13 qui représente de manière schématique une forme de réalisation des moyens techniques permettant d'extraire les index de référence 10 et de constituer un ensemble de référence 30 dans le cas de la deuxième variante de réalisation,
- figure 14 qui représente de manière schématique une forme de réalisation des moyens techniques permettant de détecter une séquence audiovisuelle déterminée 2, dans le cas de deuxième variante de réalisation
- figure 15 qui représente de manière schématique, dans le cas de deuxième variante de réalisation, l'organigramme de l'algorithme permettant de détecter une séquence audiovisuelle déterminée 2 en mettant en oeuvre les moyens techniques décrits en se référant à la figure 15.

## Première variante de réalisation

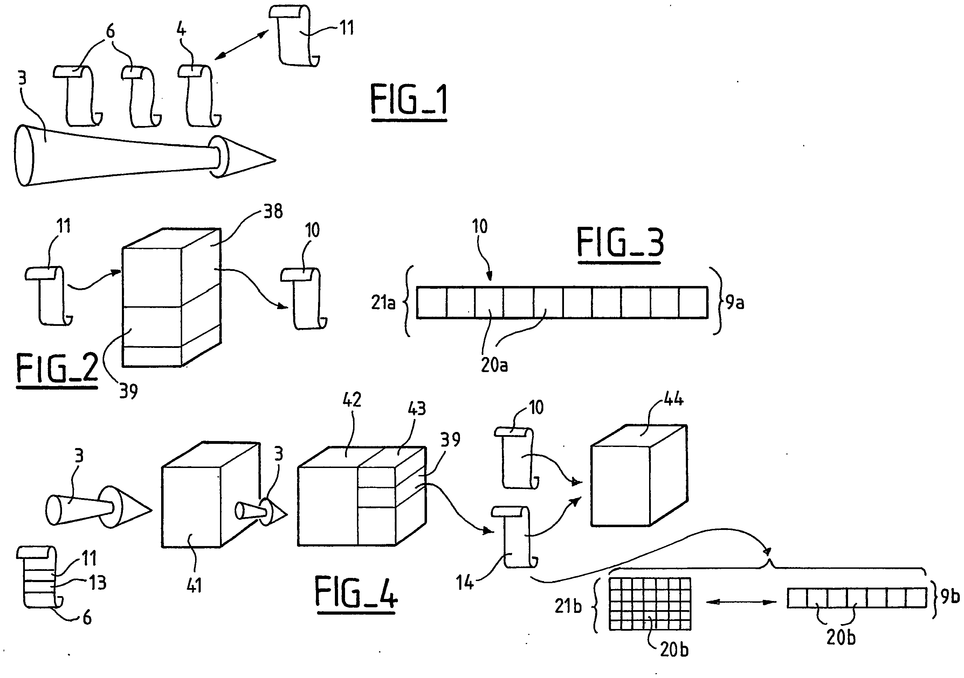

Dans le cas de la première variante de réalisation de l'invention qui va maintenant être décrite en se référant aux figures 1, 2, 3 et 4 le système est conçu pour identifier une image déterminée 11 dans un flux 3 quelconque d'images 6. L'objectif est d'identifier une image propriétaire 4 dans le flux 3.

Dans le cas de cette première variante de réalisation le système comprend des premiers moyens de calcul 38 pour calculer un index de référence 10 pour chaque image déterminée 11, en mettant en oeuvre un processus d'indexation 39. On décrira en détail ci-après un tel processus d'indexation 39.

L'index de référence 10 (fig. 3) se présente sous la forme d'un ensemble ordonné et fini 21a de valeurs 20a, notamment sous la forme d'un vecteur caractéristique 9a, codant le contenu de l'image déterminée 11. On obtient ainsi un index de référence 10 caractéristique de l'image déterminée 11.

Le système comprend en outre des moyens de réceptions 41 pour recevoir le flux 3 d'images 6 susceptible de comporter au moins une image déterminée 11. Le système comprend en outre des moyens de traitement informatique 42 pour numériser le flux 3 d'images 6. Le système comprend en outre des seconds moyens de calcul 43 pour calculer un index courant 14 pour des images courantes 13 du flux 3. Ces seconds moyens de calcul 43 calculent l'index courant 14 en mettant en oeuvre un processus d'indexation 39 comparable à celui mis en oeuvre pour le calcul des index de référence 10 des images déterminées 11. De même que l'index de référence 10, l'index courant 14 se présente sous la forme d'un ensemble ordonné 21b et fini de valeurs 20b, notamment sous la forme d'un vecteur caractéristique 9b codant le contenu de l'image courante 13.

Le système comprend en outre des moyens de comparaison 44 pour comparer l'index de référence 10 de l'image déterminée 11 avec l'index courant 14 de l'image courante 13 du flux 3 observé. Il est ainsi possible de détecter dans un flux 3 une image déterminée 11 avec une très grande précision, de manière extrêmement rapide, tout en étant robuste à de très fortes altérations photométriques.

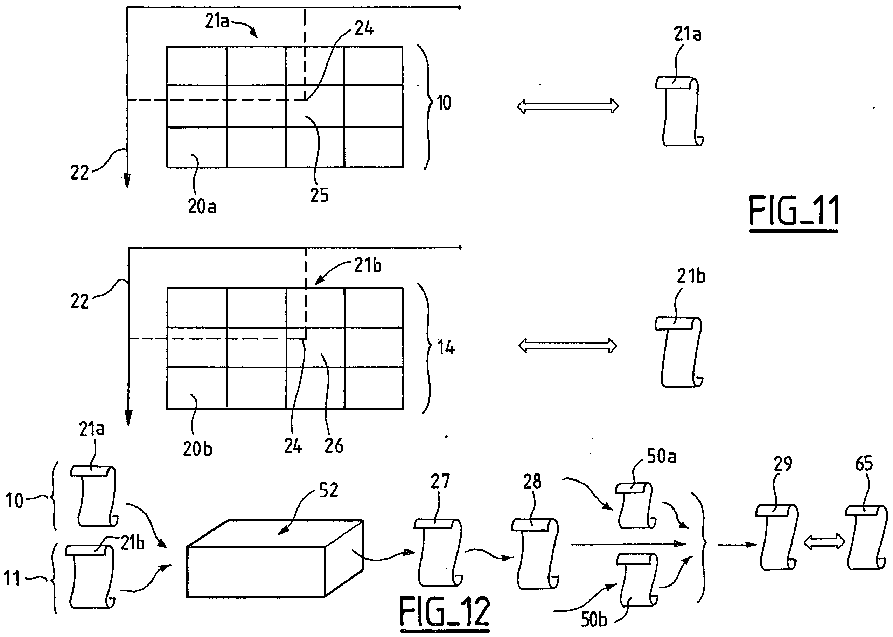

On décrira plus en détail ci-après, en se référant à la figure 12, une variante de réalisation des moyens techniques permettant d'effectuer cette détection.

### Deuxième variante de réalisation

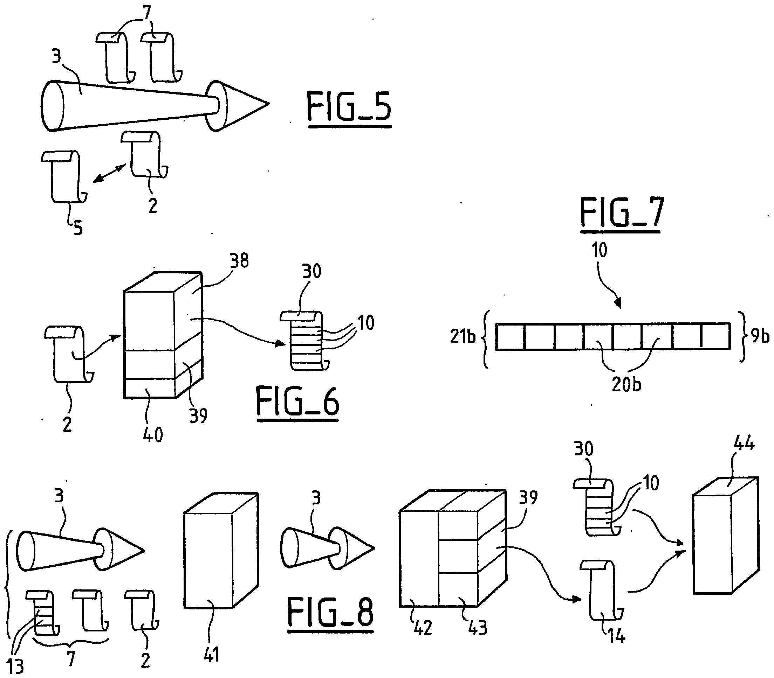

Dans le cas de la deuxième variante de réalisation de l'invention qui va maintenant être décrite en se référant aux figures 5, 6, 7 et 8 le système est conçu pour identifier une séquence audiovisuelle déterminée 2 dans un flux 3 quelconque de séquences audiovisuelles 7.

L'objectif est d'identifier une séquence audiovisuelle propriétaire 5 dans le flux 3.

Dans le cas de cette deuxième variante de réalisation le système comprend des premiers moyens d'analyse informatique 40 pour extraire des index de référence 10 de la séquence audiovisuelle déterminée 2, de manière à composer un ensemble de référence 30 d'index de référence 10.

Chaque index de référence 10 de l'ensemble de référence 30 est calculé par des moyens de calcul 38 mettant en oeuvre un processus d'indexation 39 comparable à celui qui a.été décrit dans le cas de la première variante de réalisation. Chaque index de référence 10 se présente sous la forme d'un ensemble ordonné et fini 21b de valeurs 20b, notamment sous la forme d'un vecteur caractéristique 9b codant le contenu de chaque image déterminée 11 de la séquence audiovisuelle déterminée 2. On obtient ainsi un ensemble de référence 30 caractéristique de la séquence audiovisuelle déterminée 2.

Le système comprend en outre des moyens de réception 41 pour recevoir le flux 3 de séquences audiovisuelles 7 susceptible de comporter au moins une séquence audiovisuelle déterminée 2.

Le système comprend en outre des moyens de traitement informatique 42 pour numériser le flux 3 de séquences audiovisuelles 7. On ne décrira pas, dans le cas de cette seconde variante de réalisation, les moyens techniques mis en oeuvre pour calculer l'index courant 14 de chaque image courante 13 d'une séquence audiovisuelle 7. En effet, ils sont comparables à ceux décrits dans le cas de première variante de réalisation.

Le système comprend en outre des moyens de comparaison 44 pour comparer les index de référence 10 des images déterminées 11 composant une séquence audiovisuelle déterminée 2 avec les index courants 14 des images courantes 13 du flux 3 observé. Il est ainsi possible de détecter dans un flux 3 une séquence audiovisuelle déterminée 2 avec une très grande précision, de manière extrêmement rapide, tout en étant robuste à de très fortes altérations photométriques.

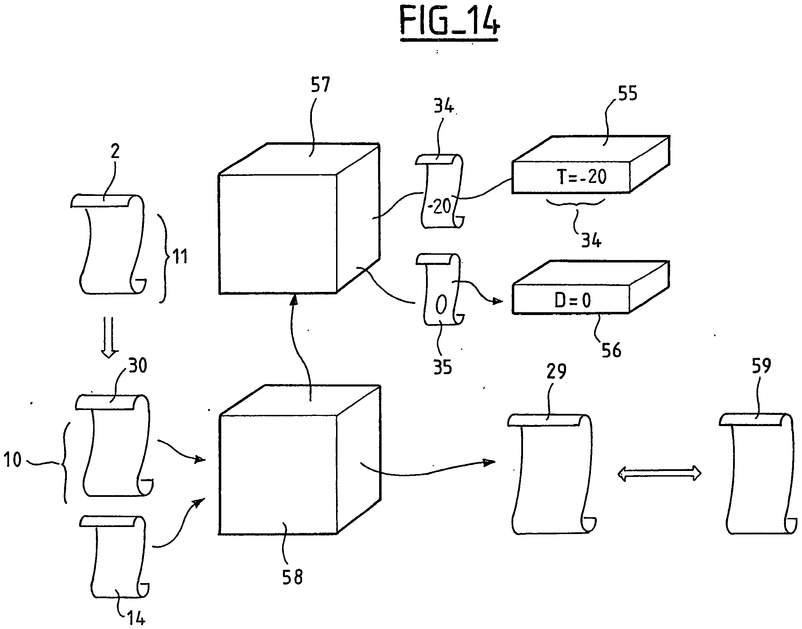

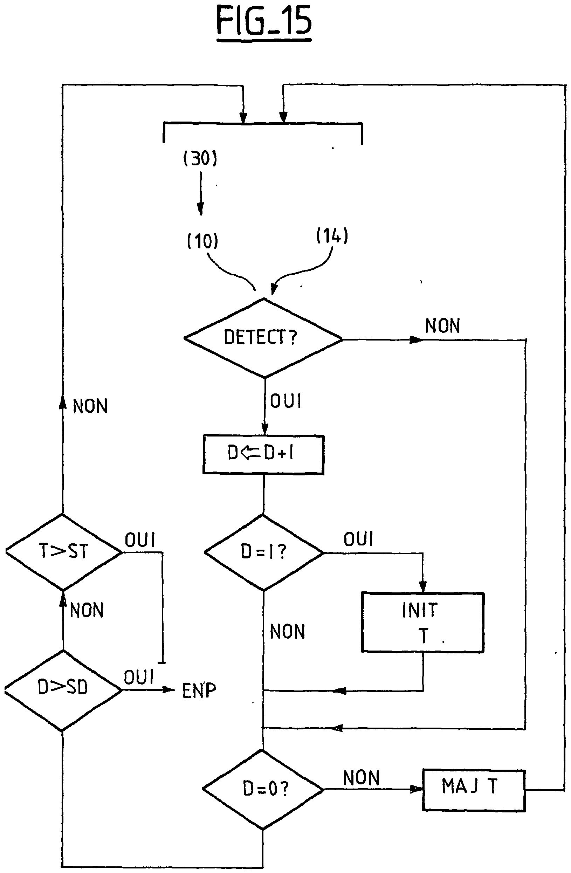

On décrira plus en détail ci-après en se référant aux figures 14 et 15 une variante de réalisation des moyens techniques permettant d'effectuer cette détection.

Les moyens techniques, notamment les premiers moyens de calcul 38 et les second moyens de calcul 43, mis en oeuvre pour calculer les index de référence 10 ou pour calculer les index courants 14 pourraient être réunis dans un même équipement informatique, toutefois on ne sort pas du champ de la présente invention en calculant les index de référence 10 dans des équipements distincts de ceux utilisés pour calculer les index courant 14. Cette remarque concerne la première variante de réalisation aussi bien que la seconde variante de réalisation

### Processus d'indexation

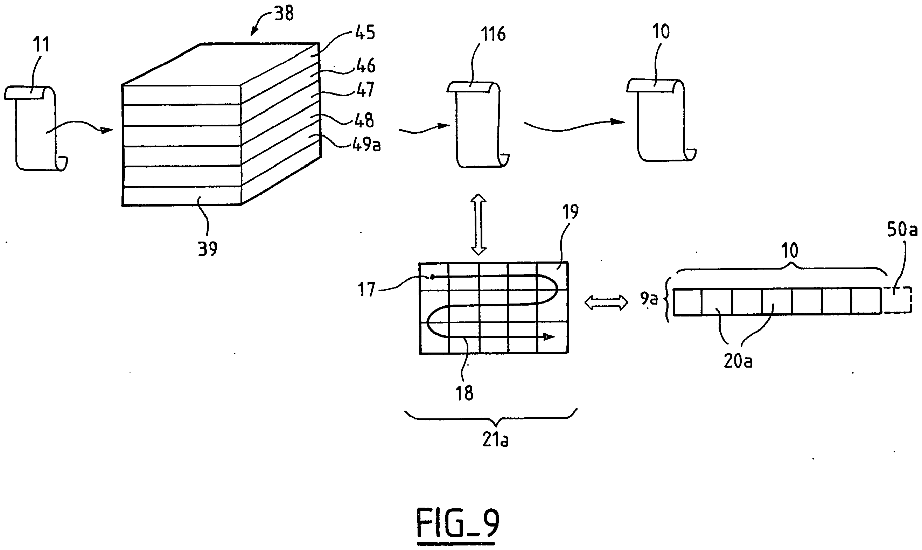

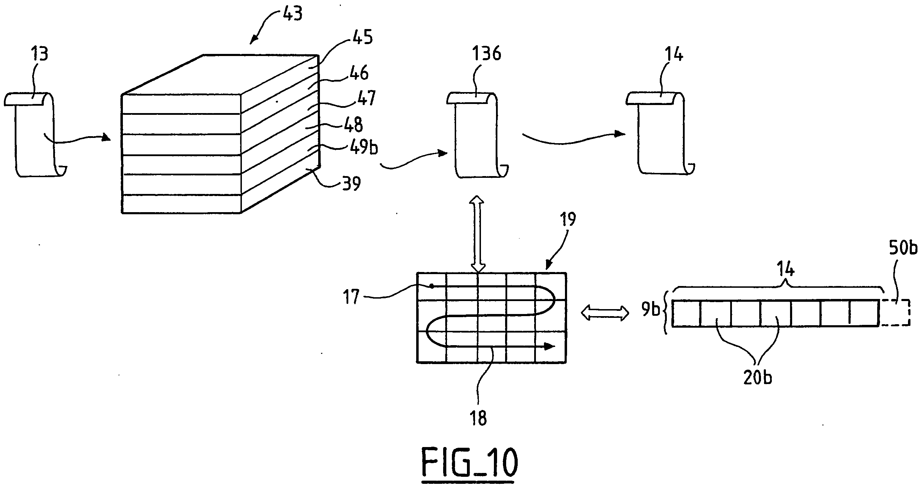

Dans le cas de la première variante de réalisation de l'invention comme dans le cas de la deuxième variante de réalisation, les premiers moyens de calcul 38 et les seconds moyens de calcul 43 pour calculer les index de référence 10 et les index courants 14 mettent en oeuvre un processus d'indexation qui va maintenant être décrit en se référant aux figures 9 et 10 une forme de réalisation. On a utilisé le terme "index" pour désigner un index de référence 10 ou un index courant 14 lorsqu'il n'y a pas lieu de faire de les distinguer.

Les éléments ayant des fonctions comparables pour calculer les index de référence 10 et les index courants 14 ont été référencés sur les figures par les mêmes références numériques.

Les premiers moyens de calcul 38 pour calculer un index de référence 10 d'une image déterminée 11 comprennent des moyens d'échantillonnage 45 pour ré-échantillonner l'image déterminée 11 en une image déterminée ré-échantillonnée aux dimensions fixées par avance. Cette image ré échantillonnée déterminée est ci-après dénommée l'image déterminée normalisée 116. Afin de calculer les index de référence 10 les premiers moyens de calcul 38 comprennent en outre des moyens de quantification discrète 46 des valeurs de pixels de l'image déterminée 11 ré-échantillonnée 116. Après quantification discrète, l'image déterminée 11 ré-échantillonnée est représentée par une matrice 19 des valeurs des pixels 17. Les premiers moyens de calcul 38 de l'index de référence 10 d'une image déterminée 11 comprennent en outre des moyens d'ordonnancement 47 pour ranger les valeurs des pixels 17 selon un ordre de parcours prédéterminé des positions 18 dans la matrice 19, notamment en concaténant les valeurs de chaque ligne de la matrice sous la forme d'un vecteur caractéristique 9a. On obtient ainsi l'index de référence 10.

Le système comprend en outre, dans le cas où l'image déterminée 11 est une image couleur comportant des niveaux de couleurs, des moyens de conversion 48 pour convertir au préalable les niveaux de couleurs de l'image déterminée 11 à ré-échantillonner en niveaux de gris.

Selon l'invention, les premiers moyens de calcul 38 comprennent en outre des moyens de traitement référence 49a pour calculer l'entropie discrète de la distribution des valeurs de l'index de référence 10. Cette entropie est ci-après dénommée l'entropie marginale de référence 50a.

Le temps de comparaison de deux index est le temps nécessaire pour calculer la distance de comparaison entre lesdits index. En complétant l'index de référence 10 avec cette valeur d'entropie marginale de référence 50a, le calcul de ladite distance de comparaison ne nécessite plus le calcul de la valeur d'entropie de référence 50a. Le temps de comparaison est ainsi réduit.

Il est possible de compléter l'index de référence 10 avec cette valeur d'entropie marginale de référence 50a.

De préférence également selon l'invention, les seconds moyens de calcul 43 pour calculer un index courant 14 d'une image courante 13 comprennent des moyens d'échantillonnage 45 pour ré échantillonner l'image courante 13 en une image courante aux dimensions fixées par avance. Cette image ré-échantillonnée courante est ci-après dénommée l'image courante normalisée 136. Les seconds moyens de calcul 43 comprennent également, pour calculer un index courant 14 d'une image courante 13, des moyens de quantification discrète 46 des valeurs de pixels de l'image courante 13. Après quantification discrète, l'image courante 13 ré-échantillonnée est représentée par une matrice 19 des valeurs des pixels 17. Les seconds moyens de calcul 43 comprennent en outre, pour calculer un index courant 14 d'une image courante 13, des moyens d'ordonnancement 47 pour ranger les valeurs des pixels selon un ordre de parcours prédéterminé des positions 18 dans la matrice, notamment en concaténant les valeurs de chaque ligne de la matrice sous la forme d'un vecteur caractéristique 9b. On obtient ainsi l'index courant 14.

Le système comprend en outre, dans le cas où l'image courante 13 est une image couleur comportant des niveaux de couleurs, des moyens de conversion 48 pour convertir au préalable les niveaux de couleurs de l'image courante 13 à ré-échantillonner en niveaux de gris.

Selon l'invention, les seconds moyens de calcul 43 comprennent en outre des moyens de traitement courant 49b pour calculer l'entropie discrète de la distribution des valeurs de l'index courant 14. Cette entropie est ci-après dénommée l'entropie marginale courante 50b.

Il est ainsi possible d'optimiser le temps de comparaison. Il est possible de compléter l'index de courant 14 avec cette valeur d'entropie marginale courante 50b.

La référence 16 a parfois été utilisée pour désigner une image déterminée normalisée qu'il s'agisse d'une image déterminée normalisée 116 ou d'une image courante normalisée 136.

### Calcul d'une distance de comparaison d'index

Dans le cas de la première variante de réalisation de l'invention comme dans le cas de la deuxième variante de réalisation, le système comprend des moyens de comparaison 44 pour (i) comparer l'index de référence 10 de l'image déterminée 11 avec l'index courant 14 de l'image courante 13 du flux 3 observé ou pour (ii) comparer les index de référence 10 des images déterminées 11 composant une séquence audiovisuelle déterminée 2 avec les index courants 14 des images courantes 13 du flux 3 observé.

On va maintenant décrire, en se référant aux figures 11 et 12, une forme de réalisation avantageuse des moyens techniques permettant d'effectuer ces comparaisons. A cet effet, il convient d'expliciter la notion de distance de comparaison 29 au sens de la présente invention.

Ainsi que cela a été décrit précédemment, chaque index de référence 10 et chaque index courant 14 se présentent sous la forme d'ensembles ordonnés et finis 21a et 21b de valeurs 20a et 20b. Il est donc possible d'identifier ces valeurs 20a et 20b dans l'index de référence 10 et l'index courant 14, par un système de coordonnées 22.

Le système comprend en outre des troisièmes moyens de calcul 52 pour définir, pour une coordonnée donnée 24 du système de coordonnées 22, un couple de valeur 25, 26 dont la première valeur 25 est la valeur figurant dans l'index de référence 10 associée à la coordonnée donnée 24, et dont la deuxième valeur 26 est la valeur figurant dans l'index courant 14 associé à la coordonnée donnée 24.

Les troisièmes moyens de calcul 52 permettent de calculer l'histogramme bi-dimensionnel 27 des couples de valeurs 25, 26 obtenus pour toutes les coordonnées du système de coordonnées de l'index de référence 10 et de l'index courant 14.

Les troisièmes moyens de calcul 52 permettent également de calculer l'entropie discrète dudit histogramme bi-dimensionnel, ci-après dénommée l'entropie de l'histogramme bi-dimensionnel 28.

Les troisièmes moyens de calcul 52 permettent également de calculer une distance de comparaison 29 entre un index de référence 10 et un index courant 14 en formant le rapport entre, au numérateur la somme de l'entropie marginale de référence 50a et de l'entropie marginale courante 50b diminuée de l'entropie de l'histogramme bi-dimensionnel 28, et au dénominateur la somme de l'entropie marginale de référence 50a et de l'entropie marginale courante 50b.

**Extraction d'index de référence**

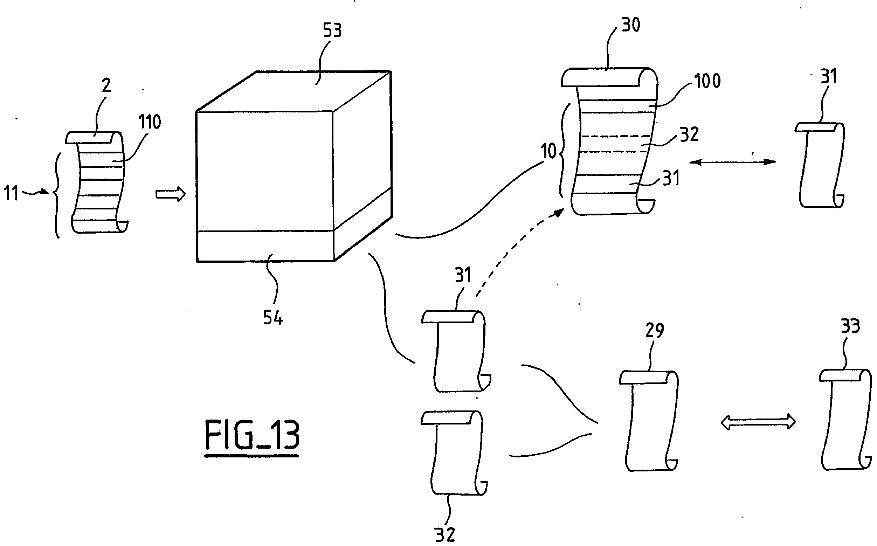

La notion de distance de comparaison 29 entre un index de référence 10 et un index courant 14 ayant été explicitée, on est maintenant en mesure de compléter la description de la seconde variante de l'invention dans le cas d'une forme de réalisation avantageuse, en se référant à la figure 13. Dans le cas de cette forme de réalisation avantageuse, destinée permettre à détection d'une séquence audiovisuelle déterminée 2 dans un flux 3 de séquences audiovisuelles 7, on procède à une phase préalable d'extraction d'index de référence 10 de manière à constituer un ensemble de référence 30.

Pour extraire de la séquence audiovisuelle déterminée 2, composée d'images déterminées 11, les index de référence 10 de la séquence audiovisuelle déterminée 2, le système comprend en outre des quatrièmes moyens de calcul 53. Ces quatrièmes moyens de calcul 53 mettent en oeuvre un algorithme de calcul 54 comportant une étape d'initialisation d'un ensemble de référence 30 contenant les index de référence 10 des images déterminées. L'ensemble de référence 30 est initialisé avec l'index de référence 100 de la première image déterminée 110 de la séquence audiovisuelle déterminée 2. L'index de référence 100 de la première image déterminée 110 de la séquence audiovisuelle déterminée 2 constitue le premier index de référence de l'ensemble de référence 30. L'algorithme de calcul 54 comporte en outre :

- (a) l'étape de (i) calculer, pour chaque image déterminée 11 de la séquence audiovisuelle déterminée 2, un index temporaire courant 31 et (ii) de calculer une distance de comparaison 29 entre l'index temporaire courant 31 et le dernier index de référence 32 ajouté à l'ensemble de référence 30,
- (b) l'étape de comparer, à un seuil prédéterminé SE 33, la distance de comparaison 29 entre l'index temporaire courant 31 et le dernier index de référence 32 ajouté à l'ensemble de référence 30,
- (c) l'étape d'ajouter l'index temporaire courant 31 à l'ensemble de référence 30, si la distance de comparaison 29 dépasse le seuil prédéterminé SE 33.

L'index temporaire courant 31 devient alors le dernier index de référence 32 de l'ensemble de référence 30. L'algorithme de calcul 54 comprend en outre l'étape d'itérer les étapes (a) à (c) jusqu'à la fin de la séquence audiovisuelle déterminée 2.

**Détection**

On va maintenant décrire, dans le cas de la première variante de réalisation, en se référant à la figure 12, la phase finale du processus de détection de l'image déterminée 11, notamment de l'image propriétaire 4, dans un flux 3 quelconque d'images 6. A cet effet, les troisièmes moyens de calcul 52 comparent à un seuil prédéterminé SF 65 la distance de comparaison 29 entre chaque index de référence 10 et l'index courant 14 de l'image courante 13 du flux 3 observé. L'image déterminée 11 est réputée détectée dans un flux 3 quelconque d'images 6 lorsque la distance de comparaison 29 entre l'index de référence 10 de l'image déterminée 11 et l'index courant 14 est inférieure au seuil prédéterminé SF 65.

On va maintenant décrire, dans le cas de la deuxième variante de réalisation, en se référant aux figures 14 et 15, la phase finale du processus de détection de la séquence audiovisuelle déterminée 2, notamment de la séquence audiovisuelle propriétaire 5, dans un flux 3 quelconque de séquences audiovisuelles 7. Dans ce cas, le système comprend des moyens d'initialisation 57 pour charger la valeur - 1, moins un, d'une variable T 34, dans un premier registre T 55, et la valeur 0, zéro, d'une variable D 35, dans un second registre D 56.

Le système comprend en outre dans le cas de cette variante de réalisation des cinquièmes moyens de calcul

58 pour calculer, pour chaque index de référence 10 de l'ensemble de référence 30, la distance de comparaison 29 entre l'index de référence 10 considéré de l'ensemble de référence 30 et l'index courant 14 d'une image courante 13 du flux 3 observé.

Si la distance de comparaison 29 ainsi calculée est inférieure à un seuil prédéterminé SD 59 le second registre D 56 est incrémenté de un. Cette condition est ci-après dénommée la condition de détection d'index de référence 10.

L'instant auquel le premier index de référence 10 de l'ensemble de référence 30 de la séquence audiovisuelle déterminée 2 satisfait la condition de détection est ci-dessous dénommé l'instant de la première détection.

Les cinquièmes moyens de calcul 58 sont agencés pour charger dans le premier registre T 55 le temps écoulé depuis l'instant de la première détection si la valeur stockée dans le second registre D 56 est différente de zéro. Les cinquièmes moyens de calcul 58 sont agencés (i) pour itérer le calcul de la distance de comparaison 29 jusqu'à ce que la valeur stockée dans le second registre D 56 atteigne le seuil prédéterminé SD 59, ou (ii) pour itérer la mise en oeuvre des moyens d'initialisation si la valeur stockée dans premier registre T 55 dépasse un seuil prédéterminé ST 60.

De sorte que la séquence audiovisuelle déterminée 2 peut être réputée détectée si la valeur stockée du second registre D 56 atteint le seuil prédéterminé SD 59.

On a représenté sur la figure 15 l'organigramme de l'algorithme qui vient d'être décrit.

## Revendications

1. Procédé pour identifier une image déterminée (11) et/ou une séquence audiovisuelle déterminée (2) dans un flux (3) quelconque d'images (6) ou de séquences audiovisuelles (7), notamment dans la perspective de pouvoir identifier une image propriétaire (4) dans ledit flux (3) et/ou de pouvoir identifier, de préférence en temps réel, plusieurs séquences audiovisuelles propriétaires (5) dans ledit flux (3) ;

   ledit procédé comprenant l'étape de calculer, pour chaque image (6), un index se présentant sous la forme d'un ensemble ordonné (21) et fini de valeurs, notamment sous la forme d'un vecteur caractéristique (9), codant le contenu de ladite image (6); ledit processus de calcul d'index étant ci-après dénommé le processus d'indexation (39) ;

   ledit procédé comprenant :

   - l'étape de calculer un index de référence (10), en mettant en oeuvre ledit processus d'indexation (39) pour ladite image déterminée (11), ou
   - l'étape d'extraire des index de référence (10) de ladite séquence audiovisuelle déterminée (2), de manière à composer un ensemble de référence (30) d'index de référence (10) ;

   de sorte que l'on obtient ainsi des index de référence (10) caractéristiques de l'image déterminée (11) et/ou de la séquence audiovisuelle déterminée (2) ;

   ledit procédé comprenant en outre l'étape de calculer un index, pour des images courantes (13) dudit flux (3), en mettant en oeuvre ledit processus d'indexation (39) pour lesdites images courantes (13) dudit flux (3); ledit index étant ci-après dénommé l'index courant (14) ;

   ledit procédé comprenant l'étape de comparer lesdits index de référence (10) avec l'index courant (14) de l'image courante (13) du flux (3) observé ;

   **caractérisé en ce que** pour calculer un index d'une image (6), notamment un index de référence (10) et/ou un index courant (14), il comprend l'étape de ré échantillonner ladite image (6) en une image aux dimensions fixées par avance ; ladite image ré-échantillonnée étant ci-après dénommée l'image normalisée (16) ;

   ledit procédé comprenant en outre, dans le cas où ladite image (6) est une image couleur comportant des niveaux de couleurs, l'étape de convertir au préalable lesdits niveaux de couleurs de ladite image (6) à ré-échantillonner en niveaux de gris ;

   ladite image normalisée (16) étant représentée par une matrice (19) des valeurs des pixels (17), après quantification discrète desdites valeurs de pixels ;

   ledit procédé comprenant en outre les étapes suivantes :

   - l'étape de ranger lesdites valeurs selon un ordre de parcours prédéterminé des positions (18) dans ladite matrice (19), notamment en concaténant lesdites valeurs de chaque ligne de ladite matrice (19) sous la forme d'un vecteur caractéristique (9), de manière à obtenir ledit index.

   ledit procédé étant tel que, lesdits index se présentant sous la forme d'ensembles ordonnés (21a, 21 b) et finis de valeurs identifiées, dans ledit index de référence (10) et ledit index courant (14), par un système de coordonnées (22), il comprend en outre les étapes suivantes :

- l'étape de définir, pour une coordonnée donnée (24) du système de coordonnées (22), un couple de valeurs (25, 26) dont :

  • la première valeur (25) est la valeur figurant dans l'index de référence (10) associée à ladite coordonnée donnée (24), et dont
  • la deuxième valeur (26) est la valeur figurant dans l'index courant (14) associé à ladite coordonnée donnée (24),

- l'étape de calculer l'histogramme bi-dimensionnel (27) desdits couples de valeurs (25, 26) obtenus pour toutes les coordonnées du système de coordonnées (22) de l'index de référence (10) et de l'index courant (14),
- l'étape de calculer l'entropie discrète dudit histogramme bi-dimensionnel, ci-après dénommée l'entropie de l'histogramme bi-dimensionnel,
- l'étape de calculer l'entropie discrète de la distribution des valeurs dudit index de référence (10) ou dudit index courant (14) ; ladite entropie étant ci-après dénommée l'entropie marginale de référence (50a) ou l'entropie marginale courante (50b) ;

de sorte que l'on optimise ainsi le temps de comparaison ;
de sorte qu'il est ainsi possible de compléter ledit index avec cette valeur d'entropie marginale ;

- l'étape de calculer une distance de comparaison (29) entre un index de référence (10) et un index courant (14) en formant le rapport entre, au numérateur la somme de l'entropie marginale de référence (50a) et de l'entropie marginale courante (50b) diminuée de l'entropie de l'histogramme bi-dimensionnel (28), et au dénominateur la somme de l'entropie marginale de référence (50a) et de l'entropie marginale courante (50b),

de sorte que ledit procédé permet de détecter dans un flux (3) une
image déterminée (11) grâce à ladite distance de comparaison avec une très grande précision, de manière extrêmement rapide, tout en étant robuste à de très fortes altérations
photométriques.

2. Procédé selon la revendication 1 ; ledit procédé étant tel que, pour extraire de ladite séquence audiovisuelle déterminée (2) les index de référence (10) de ladite séquence audiovisuelle déterminée (2), il comprend en outre les étapes suivantes :

  - l'étape d'initialiser un ensemble de référence (30) contenant lesdits index de référence (10) desdites images déterminées (11) avec l'index de référence (100) de la première image déterminée (110) de ladite séquence audiovisuelle déterminée (2) ; ledit index de référence (100) de ladite première image déterminée (110) de ladite séquence audiovisuelle déterminée (2) constituant le premier index de référence dudit ensemble de référence (30) ;
  ledit procédé comprenant en outre :
  - (a) l'étape de calculer, pour chaque image déterminée (11) de ladite séquence audiovisuelle déterminée (2), un index temporaire courant (31) et de calculer une distance de comparaison (29) entre ledit index temporaire courant (31) et le dernier index de référence (32) ajouté audit ensemble de référence (30),
  - (b) l'étape de comparer, à un seuil prédéterminé SE (33), ladite distance de comparaison (29) entre ledit index temporaire courant (31) et le dernier index de référence (32) ajouté audit ensemble (30);
  - (c) l'étape d'ajouter ledit index temporaire courant (31) audit ensemble de référence (30), si la distance de comparaison (29) dépasse ledit seuil prédéterminé SE (33) ; ledit index temporaire courant (31) devenant le dernier index de référence (32) dudit ensemble de référence (30) ;
  ledit procédé comprenant en outre l'étape d'itérer les étapes (a) à (c) jusqu'à la fin de ladite séquence audiovisuelle déterminée (2).

3. Procédé selon la revendication 1 ou 2 ; ledit procédé étant tel que pour comparer lesdits index de référence (10) avec l'index courant (14) de l'image courante (13) du flux (3) observé, il comprend en outre l'étape de comparer ladite distance de comparaison (29) à un seuil prédéterminé SF (65) ;
de telle sorte que dans le cas d'un flux (3) quelconque d'images (6) ladite image déterminée (11) est détectée à la condition que ladite distance de comparaison (29) entre l'index de référence (10) de ladite image déterminée (11) et l'index courant (14) est inférieure audit seuil prédéterminé SF (65).

4. Procédé selon la revendication 2 ; ledit procédé étant plus particulièrement conçu pour détecter une séquence audiovisuelle déterminée (2) dans un flux (3) quelconque de séquences audiovisuelles (7) ; ledit procédé comprenant les étapes suivantes :

- (a) l'étape d'initialiser une variable T (34) à - 1, l'étape d'initialiser une variable D (35) à 0,
- (b) l'étape de calculer, pour chaque index de référence (10) dudit ensemble de référence (30), ladite distance de comparaison (29) entre ledit index de référence (10) dudit ensemble de référence (30) et l'index courant (14) ; de sorte que si ladite distance de comparaison (29) est inférieure à un seuil prédéterminé SD (59) ladite variable D (35) est d'incrémentée de un ; ladite condition étant ci-après dénommée condition de détection d'index de référence (10).

le procédé étant tel que l'instant auquel le premier index de référence (10) dudit ensemble de référence (30) de ladite séquence audiovisuelle déterminée (2) satisfait ladite condition de détection est ci-dessous dénommé l'instant de la première détection ;

le procédé comprend en outre les étapes suivantes :

- (c) l'étape d'assigner à ladite variable T (34) le temps écoulé depuis ledit instant de la première détection si la variable D (35) est différente de zéro,
- (d) étape d'itérer l'étape (b) jusqu'à ce que ladite variable D (35) atteigne ledit seuil prédéterminé SD (59) ; ou d'itérer l'étape (a) si ladite variable T (34) dépasse un seuil prédéterminé ST (60),
- (e) l'étape de détecter ladite séquence audiovisuelle déterminée (2) si la variable D (35) atteint ledit seuil prédéterminé SD (59).

5. Système pour identifier une image déterminée (11) et/ou une séquence audiovisuelle déterminée (2) dans un flux (3) quelconque d'images (6) ou de séquences audiovisuelles (7), notamment dans la perspective de pouvoir identifier une image propriétaire (4) dans ledit flux (3) et/ou de pouvoir identifier, de préférence en temps réel, plusieurs séquences audiovisuelles propriétaires (5) dans ledit flux (3) ;

ledit système étant **caractérisé en ce qu'**il comprend :

- des premiers moyens de calcul (38) pour calculer un index de référence (10) pour ladite image déterminée (11), en mettant en oeuvre un processus d'indexation (39), ou
- des premiers moyens d'analyse informatique (40) pour extraire des index de référence (10) de ladite séquence audiovisuelle déterminée (2), de manière à composer un ensemble de référence (30) d'index de référence (10) ;
- lesdits premiers moyens de calcul (38) pour calculer un index de référence (10) d'une image déterminée (11) comprenant :
- des moyens d'échantillonnage (45) pour ré échantillonner ladite image déterminée (11) en une image déterminée ré-échantillonnée aux dimensions fixées par avance,
- des moyens de quantification discrète (46) des valeurs de pixels de ladite image déterminée (11) ré-échantillonnée de sorte que ladite image déterminée (11) ré-échantillonnée est représentée par une matrice (19) des valeurs des pixels (17), après quantification discrète ;
- des moyens d'ordonnancement (47) pour ranger lesdites valeurs des pixels (17) selon un ordre de parcours prédéterminé des positions (18) dans ladite matrice (19), notamment en concaténant lesdites valeurs de chaque ligne de ladite matrice (19) sous la forme d'un vecteur caractéristique (9a), de manière à obtenir ledit index de référence (10) ;

ledit système comprenant en outre, dans le cas où ladite image déterminée (11) est une image (6) couleur comportant des niveaux de couleurs, des moyens de conversion (48) pour convertir au préalable lesdits niveaux de couleurs de ladite image déterminée (11) à ré-échantilloner en niveaux de gris,

ledit système comprenant en outre :

- des moyens de réception (41) pour recevoir ledit flux (3) d'images (6) ou de séquences audiovisuelles (7) comportant au moins une image déterminée (11) et/ou au moins une séquence audiovisuelle déterminée (2),
- des moyens de traitement informatique (42) pour numériser ledit flux (3) d'images (6) ou de séquences audiovisuelles (7) ;

ledit système étant **caractérisé en outre en ce que**, ledit index de référence (10) se présentant sous la forme d'un ensemble ordonné (21 a) et fini de valeurs (20a), notamment sous la forme d'un vecteur caractéristique (9a), codant le contenu de ladite image déterminée (11) ;

de sorte que l'on obtient ainsi un index de référence (10) caractéristique de l'image déterminée (11) et/ou de la séquence audiovisuelle déterminée (2) ;

ledit système comprenant en outre :

- des seconds moyens de calcul (43) pour calculer un index courant (14) pour des images courantes (13) dudit flux (3), en mettant en oeuvre ledit processus d'indexation (39) pour lesdites images courantes (13) dudit flux (3) ; lesdits seconds moyens de calcul (43) pour calculer un index courant (14) d'une image courante (13) comprenant :

- des moyens d'échantillonnage (45) pour ré échantillonner ladite image courante (13) en une image courante (13) aux dimensions fixées par avance,
- des moyens de quantification discrète (46) des valeurs de pixels de ladite image courante (13) de sorte que ladite image courante (13) ré-échantillonnée est représentée par une matrice (19) des valeurs des pixels (17), après quantification discrète ;
- des moyens d'ordonnancement (47) pour ranger lesdites valeurs des pixels selon un ordre de parcours prédéterminé des positions (18) dans ladite matrice (19), notamment en concaténant lesdites valeurs de chaque ligne de ladite matrice (19) sous la forme d'un vecteur caractéristique (9b), de manière à obtenir ledit index courant (14) ;

ledit système comprenant en outre, dans le cas où ladite image courante (13) est une image (6) couleur comportant des niveaux de couleurs, des moyens de conversion (48) pour convertir au préalable lesdits niveaux de couleurs de ladite image courante (13) à ré-échantillonner en niveaux de gris.

ledit index courant (14) se présentant sous la forme d'un ensemble ordonné (21b) et fini de valeurs, notamment sous la forme d'un vecteur caractéristique (9b), codant le contenu de ladite image courante (13) ;

ledit système comprenant en outre :

- des moyens de comparaison (44) pour comparer ledit index de référence (10) de ladite image déterminée (11) avec l'index courant (14) de l'image courante (13) du flux (3) observé ;
- lesdits premiers moyens de calcul (38) comprenant en outre des moyens de traitement de référence (49a) pour calculer l'entropie discrète de la distribution des valeurs dudit index de référence (10); ladite entropie étant ci-après dénommée l'entropie marginale de référence (50a) ;

de sorte que l'on optimise ainsi le temps de comparaison ;

de sorte que l'on peut ainsi compléter ledit index de référence (10) avec cette valeur d'entropie marginale de référence (50a),

- ledit seconds moyen de calcul (43) comprenant en outre des moyens de traitement courant (49b) pour calculer l'entropie discrète de la distribution des valeurs dudit index courant (14) ; ladite entropie étant ci-après dénommée l'entropie marginale courante (50b) ;

de sorte que l'on optimise ainsi le temps de comparaison ;

de sorte que l'on peut ainsi compléter ledit index courant (14) avec cette valeur d'entropie courante,

ledit système étant tel que, lesdits index de référence (10) et lesdits index courant (14) se présentant sous la forme d'ensembles ordonnés (21a, 21b) et finis de valeurs identifiées, dans ledit index de référence (10) et ledit index courant (14), par un système de coordonnées (22) ;

il comprend en outre des troisièmes moyens de calcul (52) pour :

- définir, pour une coordonnée donnée (24) du système de coordonnées (22), un couple de valeur (25, 26) dont la première valeur (25) est la valeur figurant dans l'index de référence (10) associée à ladite coordonnée donnée (24), et dont la deuxième valeur (26) est la valeur figurant dans l'index courant (14) associé à ladite coordonnée donnée (24),
- calculer l'histogramme bi-dimensionnel (27) desdits couples de valeurs (25, 26) obtenus pour toutes les coordonnées du système de coordonnées (22) de l'index de référence (90) et de l'index courant (14),
- calculer l'entropie discrète dudit histogramme bi-dimensionnel, ci-après dénommée l'entropie de l'histogramme bi-dimensionnel (28),
- calculer une distance de comparaison (29) entre un index de référence (10) et un index courant (14) en formant le rapport entre, au numérateur la somme de l'entropie marginale de référence (50a) et de l'entropie marginale courante (50b) diminuée de l'entropie de l'histogramme bi-dimensionnel (28), et au dénominateur la somme de l'entropie marginale de référence (50a) et de l'entropie marginale courante (50b),
- détecter dans un flux (3) une image déterminée (11), grâce à ladite distance de comparaison, avec une très grande précision, de manière extrêmement rapide, tout en étant robuste à de très fortes altérations photométriques,

**6.** Système selon la revendication 5 ; ledit système étant tel que, pour extraire de ladite séquence audiovisuelle déterminée (2), composée d'images déterminées (11), les index de référence (10) de ladite séquence audiovisuelle déterminée (2), il comprend en outre des quatrièmes moyens de calcul (53) mettant en oeuvre un algorithme de calcul (54) comportant une étape d'initialisation d'un ensemble de référence (30) contenant lesdits index de référence (10) desdites images déterminées (11) avec l'index de référence (100) de la première image déterminée (110) de ladite séquence audiovisuelle déterminée (2); ledit index de référence (100) de ladite première image déterminée (110) de ladite séquence audiovisuelle déterminée (2) constituant le premier index de référence de l'ensemble de référence (30) ;

ledit algorithme de calcul (54) comportant en outre :

- (a) l'étape de calculer, pour chaque image déterminée (11) de ladite séquence audiovisuelle déterminée (2), un index temporaire courant (31) et de calculer une distance de comparaison (29) entre ledit index temporaire courant (31) et le dernier index de référence (32) ajouté audit ensemble de référence (30);
- (b) l'étape de comparer, à un seuil prédéterminé SE (33), ladite distance de comparaison (29) entre ledit index temporaire courant (31) et le dernier index de référence (32) ajouté audit ensemble de référence (30);
- (c) l'étape d'ajouter ledit index temporaire courant (31) audit ensemble de référence (30), si la distance de comparaison (29) dépasse ledit seuil prédéterminé SE (33) ; ledit index temporaire courant (31) devenant le dernier index de référence (32) dudit ensemble de référence (30) ;

ledit algorithme de calcul (54) comprenant en outre l'étape d'itérer les étapes (a) à (c) jusqu'à la fin de ladite séquence audiovisuelle déterminée (2).

**7.** Système selon la revendication 5; ledit système étant tel que lesdits troisièmes moyens de calcul (52) comparent à un seuil prédéterminé SF (65) ladite distance de comparaison (29) entre lesdits index de référence (10) et l'index courant (14) de l'image courante (13) du flux (3) observé ;

de telle sorte que dans le cas d'un flux (3) quelconque d'images (6) ladite image déterminée (11) est détectée à la condition que ladite distance de comparaison (29) entre l'index de référence (10) de ladite image déterminée (11) et l'index courant (14) soit inférieure audit seuil prédéterminé SF (65).

**8.** Système selon la revendication 6 ; ledit système étant plus particulièrement conçu pour détecter une séquence audiovisuelle déterminée (2) dans un flux (3) quelconque de séquences audiovisuelles (7) ;

ledit système comprenant des moyens d'initialisation (57) pour charger :

la valeur - 1 dans un premier registre T (55), et
la valeur 0 dans un second registre D (56) ;
ledit système comprenant en outre des cinquièmes moyens de calcul (58) pour calculer, pour chaque index de référence (10) dudit ensemble de référence (30), ladite distance de comparaison (29) entre ledit index de référence (10) dudit ensemble de référence (30) et l'index courant (14) ; de sorte que si ladite distance de comparaison (29) est inférieure à un seuil prédéterminé SD (59) le second registre D (56) est incrémentée de un ; ladite condition étant ci-après dénommée condition de détection d'index de référence (10).
le système étant tel que l'instant auquel le premier index de référence (10) dudit ensemble de référence (30) de ladite séquence audiovisuelle déterminée (2) satisfait ladite condition de détection est ci-dessous dénommé l'instant de la première détection ;
lesdits cinquièmes moyens de calcul (58) étant agencés pour charger dans ledit premier registre T (55) le temps écoulé depuis ledit instant de la première détection si la valeur stockée dans ledit second registre D (56) est différente de zéro ;
lesdits cinquièmes moyens de calcul (58) étant agencés pour itérer ledit calcul de ladite distance de comparaison (29), jusqu'à ce que la valeur stockée dans ledit second registre D (56) atteigne ledit seuil prédéterminé SD (59), ou pour itérer la mise en oeuvre desdits moyens d'initialisation (57) si la valeur stockée dans premier registre T (55) dépasse un seuil prédéterminé ST (60),
de sorte que ladite séquence audiovisuelle déterminée (2) est détectée si la valeur stockée dudit second registre D (56) atteint ledit seuil prédéterminé SD (59).

**Claims**

**1.** Method for identifying a determined image (11) and/or a determined audio-visual sequence (2) in an unspecified flow (3) of images (6) or of audio-visual sequences (7), in particular in order to be able to identify a proprietary image

17

(4) in said flow (3) and/or to be able to identify, preferably in real time, several proprietary audio-visual sequences (5) in said flow (3);

said method including the step of calculating, for each image (6), an index in the form of a finished and ordered set (21) of values, in particular in the form of a characteristic vector (9), coding the contents of said image (6); said index calculating process being hereafter called indexing process (39);

said method including:

- the step of calculating a reference index (10), by implementing said indexing process (39) for said determined image (11), or
- the step of extracting reference indexes (10) from said determined audio-visual sequence (2), so as to compose a reference set (30) of reference indexes (10);

so that it is thus obtained reference indexes (10) characteristic of the determined image (11) and/or of the determined audio-visual sequence (2);

said method further including the step of calculating an index, for current images (13) of said flow (3), by implementing said indexing process (39) for said current images (13) of said flow (3); said index being hereafter called current index (14);

said method including the step of comparing said reference indexes (10) with the current index (14) of the current image (13) of the flow (3) observed;

**characterized in that**, for calculating an index of an image (6), in particular a reference index (10) and/or a current index (14), it includes the step of re-sampling said image (6) into an image with preliminary fixed dimensions; said re-sampled image being hereafter called normalized image (16);

said method further including, if said image (6) is a color image comprising color levels, the step of converting first said color levels of said image (6) to be re-sampled into gray levels;

said normalized image (16) being represented by a matrix (19) of the pixel values (17), after a discrete quantification of said pixel values;

said process further including the following steps:

- the step of arranging said values according to a predetermined passage order for the positions (18) in said matrix (19), in particular by concatenating said values of each line in said matrix (19) in the form of a characteristic vector (9), so as to obtain said index;

said method being so configured that, as said indexes are in the form of finished and ordered sets (21a, 21 b) of values identified, in said reference index (10) and said current index (14), by a system of coordinates (22), it further includes the following steps:

- the step of defining, for a given co-ordinate (24) of the system of coordinates (22), a couple of values (25, 26):

  • whose first value (25) is the value in the reference index (10) that is associated with said given coordinate (24), and
  • whose second value (26) is the value in the current index (14) that is associated with said given coordinate (24),

- the step of calculating the two-dimensional histogram (27) of said couples of values (25, 26) obtained for all the coordinates of the system of coordinates (22) of the reference index (10) and of the current index (14),
- the step of calculating the discrete entropy of said two-dimensional histogram, hereafter called two-dimensional histogram entropy,
- the step of calculating the discrete entropy of the distribution of the values of said reference index (10) or of said current index (14); said entropy being hereafter called reference marginal entropy (50a) or current marginal entropy (50b);

so that the comparison time is thus optimized;
so that it is thus possible to supplement said index with this value of marginal entropy;
the step of calculating a comparison distance (29) between a reference index (10) and a current index (14) by forming the ratio between, at the numerator, the sum of the reference marginal entropy (50a) and of the current marginal entropy (50b) minus the entropy of the two-dimensional histogram (28), and, at the denominator, the sum of the reference marginal entropy (50a) and of the current marginal entropy (50b),
so that said method enables to detect in a flow (3) a determined image (11) thanks to said comparison distance

with a very high degree of accuracy, in an extremely fast way, while being resistant to very strong photometric deteriorations.

2. Method according to claim 1, wherein said method is so configured that,

for extracting the reference indexes (10) from said determined audio-visual sequence (2), it further includes the following steps:

- the step of initializing a reference set (30) containing said reference indexes (10) of said determined images (11) with the reference index (100) of the first determined image (110) of said determined audio-visual sequence (2); said reference index (100) of said first determined image (110) of said determined audio-visual sequence (2) constituting the first reference index of said reference set (30);

said method further including:

- (a) the step of calculating, for each determined image (11) of said determined audio-visual sequence (2), a current temporary index (31) and of calculating a comparison distance (29) between said current temporary index (31) and the last reference index (32) added to said reference set (30),
- (b) the step of comparing, with a predetermined threshold SE (33), said comparison distance (29) between set current temporary index (31) and the last reference index (32) added to said set (30);
- (c) the step of adding said current temporary index (31) to said reference set (30), if the comparison distance (29) exceeds said predetermined threshold SE (33); said current temporary index (31) becoming the last reference index (32) of said reference set (30);

said method further including the step of iterating the steps (a) to (c) up to the end of said determined audio-visual sequence (2).

3. Method according to claim 1 or 2, wherein said method is so configured that, for comparing said reference indexes (10) with the current index (14) of the current image (13) of the flow (3) observed, it further includes the step of comparing said comparison distance (29) with a predetermined threshold SF (65);

such that in the case of an unspecified flow (3) of images (6) said determined image (11) is detected on the condition that said comparison distance (29) between the reference index (10) of said determined image (11) and the current index (14) is lower to said predetermined threshold SF (65).

4. Method according to claim 2, wherein said method is more particularly conceived for detecting a determined audio-visual sequence (2) in an unspecified flow (3) of audio-visual sequences (7); said method including the following steps:

- (a) the step of initializing a variable T (34) with - 1, the step of initializing a variable D (35) with 0,
- (b) the step of calculating, for each reference index (10) of said reference set (30), said comparison distance (29) between said reference index (10) of said reference set (30) and the current index (14); so that, if said comparison distance (29) is lower than a predetermined threshold SD (59), said variable D (35) is incremented by one; said condition being hereafter called detection condition for the reference index (10).
the method being so configured that the instant when the first reference index (10) of said reference set (30) of said determined audio-visual sequence (2) fulfills said detection condition is called below first detection instant; the method further includes the following steps:
- (c) the step of allotting to said variable T (34) the time elapsed since said first detection instant if the variable D (35) is different from zero,
- (d) the step of iterating the step (b) until said variable D (35) reaches said predetermined threshold SD (59); or of iterating the step (a) if said variable T (34) exceeds a predetermined threshold ST (60),
- (e) the step of detecting said determined audio-visual sequence (2) if the variable D (35) reaches said predetermined threshold SD (59).

5. System for identifying a determined image (11) and/or a determined audio-visual sequence (2) in an unspecified flow (3) of images (6) or audio-visual sequences (7), in particular in order to be able to identify a proprietary image (4) in said flow (3) and/or to be able to identify, preferably in real time, several audio-visual proprietary sequences (5) in said flow (3);
said system being **characterized in that** it includes:

- first means of calculation (38) for calculating a reference index (10) for said determined image (11), by implementing an indexing process (39), or

- first means of data-processing analysis (40) for extracting reference indexes (10) from said determined audio-visual sequence (2), so as to compose a reference set (30) of reference indexes (10);

- said first means of calculation (38) for calculating a reference index (10) of a determined image (11) including:

- means of sampling (45) for re-sampling said determined image (11) in a determined image re-sampled with the preliminary fixed dimensions,

- means of discrete quantification (46) for pixel values of said re-sampled determined image (11) so that said re-sampled determined image (11) is represented by a matrix (19) of the pixel values (17), after a discrete a quantification;

- means of arrangement (47) for arranging said pixel values (17) according to a predetermined passage order for the positions (18) in said matrix (19), in particular by concatenating said values of each line in said matrix (19) in the form of a characteristic vector (9a), so as to obtain said reference index (10);

said system further including, if said determined image (11) is a color image (6) comprising color levels, means of conversion (48) for converting first said color levels of said determined image (11) to be re-sampled into gray levels, said system further including:

- means of reception (41) for receiving said flow (3) of images (6) or of audio-visual sequences (7) comprising at least one determined image (11) and/or at least one determined audio-visual sequence (2),

- means of data processing (42) for digitizing said flow (3) of images (6) or of audio-visual sequences (7);

said system being further **characterized in that** said reference index (10) has the form of a finished and ordered set (21a) of values (20a), in particular the form of a characteristic vector (9a), coding the contents of said determined image (11);

so that it is thus obtained a reference index (10) characteristic of the determined image (11) and/or of a determined audio-visual sequence (2);

said system further including:

- second means of calculation (43) for calculating a current index (14) for current images (13) of said flow (3), by implementing said indexing process (39) for said current images (13) of said flow (3); said second means of calculation (43) for calculating a current index (14) of a current image (13) including:

- means of sampling (45) for re-sampling said current image (13) into a current image (13) with preliminary fixed dimensions,

- means of discrete quantification (46) for the pixel values of said current image (13) so that said re-sampled current image (13) is represented by a matrix (19) of the pixel values (17), after a discrete quantification;

- means of arrangement (47) for arranging said pixel values according to a predetermined passage order for the positions (18) in said matrix (19), in particular by concatenating said values of each line in said matrix (19) in the form of a characteristic vector (9b), so as to obtain said current index (14);

said system further including, if said current image (13) is a color image (6) comprising color levels, means of conversion (48) for converting first said color levels of said current image (13) to be re-sampled into gray levels; said current index (14) having the form of a finished and ordered set (21 b) of values, in particular the form of a characteristic vector (9b), coding the contents of said current image (13); said system further including:

- means of comparison (44) for comparing said reference index (10) of said reference image (11) with the current index (14) of the current image (13) of the flow (3) observed;

- said first means of calculation (38) further including means of reference processing (49a) for calculating the discrete entropy of the distribution of the values of said reference index (10); said entropy being hereafter called reference marginal entropy (50a);

so that the time of comparison is thus optimized;
so that said reference index (10) can thus be supplemented with this value of the reference marginal entropy (50a);

- said second means of calculation (43) further including means of current processing (49b) for calculating the discrete entropy of the distribution of the values of said current index (14); said entropy being hereafter called current marginal entropy (50b);

so that the time of comparison thus is optimized;
so that said current index (14) can thus be supplemented with this value of the current entropy,
said system being so configured that, as said reference indexes (10) and said current indexes (14) have the form of finished and ordered sets (21a, 21b) of values identified, in said reference index (10) and said current index (14), by a system of coordinates (22):

it further includes third means of calculation (52) for:

- defining, for a given co-ordinate (24) of the system of coordinates (22), a couple of values (25, 26) whose first value (25) is the value in the reference index (10) associated with said given co-ordinate (24), and whose second value (26) is the value in the current index (14) associated with said given co-ordinate (24),
- calculating the two-dimensional histogram (27) of said couples of values (25, 26) obtained for all the coordinates of the system of coordinates (22) of the reference index (10) and of the current index (14),
- calculating the discrete entropy of said two-dimensional histogram, hereafter called two-dimensional histogram entropy (28),
- calculating a comparison distance (29) between a reference index (10) and a current index (14) by forming the ratio between, at the numerator, the sum of the reference marginal entropy (50a) and of the current marginal entropy (50b) minus the two-dimensional histogram entropy (28) and, at the denominator, the sum of the reference marginal entropy (50a) and of the current marginal entropy (50b),
- detecting in a flow (3) a determined image (11), thanks to said comparison distance, with a very high degree of accuracy, in an extremely fast way, while being resistant to very strong photometric deteriorations.

6. System according to claim 5, wherein said system is so configured that, for extracting from said determined audio-visual sequence (2), composed of determined images (11), the reference indexes (10) in said determined audio-visual sequence (2), it further includes fourth means of calculation (53) implementing a calculation algorithm (54) comprising a step of initializing a reference set (30) containing said reference indexes (10) of said determined images (11) with the reference index (100) of the first determined image (110) of said determined audio-visual sequence (2); said reference index (100) of said first determined image (110) of said determined audio-visual sequence (2) constituting the first reference index of the reference set (30);
said calculation algorithm (54) further comprising:

- (a) the step of calculating, for each determined image (11) of said determined audio-visual sequence (2), a current temporary index (31) and of calculating a comparison distance (29) between the said current temporary index (31) and the last reference index (32) added to said reference set (30);
- (b) the step of comparing, with a predetermined threshold SE (33), said comparison distance (29) between said current temporary index (31) and the last reference index (32) added to said reference set (30);
- (c) the step of adding said current temporary index (31) to said reference set (30), if the comparison distance (29) exceeds said predetermined threshold SE (33); said current temporary index (31) becoming the last reference index (32) of said reference set (30);

said calculation algorithm (54) further including the step of iterating the steps (a) to (c) up to the end of said determined audio-visual sequence (2).

7. System according to claim 5, wherein said system is so configured that said third means of calculation (52) compare with a predetermined threshold SF (65) said comparison distance (29) between said reference indexes (10) and the current index (14) of the current image (13) of the flow (3) observed;
so that, in the case of an unspecified flow (3) of images (6), said determined image (11) is detected on the condition that said comparison distance (29) between the reference index (10) of said determined image (11) and the current index (14) is lower to said predetermined threshold SF (65).

8. System according to claim 6, wherein said system is more particularly conceived for detecting a determined audio-visual sequence (2) in an unspecified flow (3) of audio-visual sequences (7);
said system including means of initialization (57) for loading:

the value -1 into a first register T (55), and
the value 0 into a second register D (56);
said system further including fifth means of calculation (58) for calculating, for each reference index (10) of said reference set (30), said comparison distance (29) between said reference index (10) of said reference set (30) and the current index (14); so that, if said comparison distance (29) is lower than a predetermined threshold SD (59) the second register D (56) is incremented by one; said condition being hereafter called detection condition for the reference index (10);

the system being so configured that the instant when the first reference index (10) of said reference set (30) of said determined audio-visual sequence (2) fulfills said detection condition is called below the first detection instant;

said fifth means of calculation (58) being arranged so as to load into said first register T (55) the time elapsed since said first detection instant if the value stored in said second register D (56) is different from zero;

said fifth means of calculation (58) being arranged so as to iterate said calculation of said comparison distance (29), until the value stored in said second register D (56) reaches said predetermined threshold SD (59), or to iterate the implementation of said means of initialization (57) if the value stored in the first register T (55) exceeds a predetermined threshold ST (60),

so that said determined audio-visual sequence (2) is detected if the value stored in said second register D (56) reaches said predetermined threshold SD (59).

**Patentansprüche**

1.  Verfahren zur Identifizierung eines bestimmtes Bildes (11) und/oder einer bestimmten audiovisuellen Sequenz(2) in einem beliebigen Fluss (3) von Bildern (6) oder von audiovisuellen Sequenzen (7), insbesondere zur Identifizierung eines proprietären Bildes (4) im genannten Fluss (3) und/oder zur Identifizierung, vorzugsweise in Echtzeit, von mehreren proprietären audiovisuellen Sequenzen (5) im genannten Fluss (3);
    wobei das genannte Verfahren den Berechnungsschritt umfasst, um für jedes Bild (6) ein Index zu berechnen, der als beendete und geordnete Wertmenge (21), insbesondere als charakteristischer, den Inhalt des genannten Bildes (6) kodierender Vektor (9), ausgebildet ist, wobei der Indexberechnungsprozess nachfolgend als Indexierungsprozess (39) bezeichnet ist;
    wobei das genannte Verfahren umfasst:

    - den Berechnungsschritt zum Berechnen eines Referenzindexes (10), bei dem der genannte Indexierungsprozess (39) für das genannte bestimmte Bild (11) implementiert wird, oder
    - den Extrahierungsschritt zum Extrahieren der Referenzindexe (10) aus der genannten bestimmten audiovisuellen Sequenz (2), um eine Referenzmenge (30) der Referenzindexe (10) zu bilden;

    sodass Referenzindexe (10) so erhalten werden, die für das bestimmte Bild (11) und/oder für die bestimmte audiovisuelle Sequenz (2) charakteristisch sind;
    wobei das genannte Verfahren außerdem den Berechnungsschritt zum Berechnen eines Indexes für laufende Bilder (13) des genannten Flusses (3) umfasst, bei dem der genannte Indexierungsprozess (39) für die genannte laufende Bilder (13) des genannten Flusses (3) implementiert wird, wobei der genannte Index nachfolgend als laufender Index (14) bezeichnet ist;
    wobei das genannte Verfahren den Vergleichsschritt zum Vergleichen der genannten Referenzindexe (10) mit dem laufenden Index (14) des laufenden Bildes (13) des beobachteten Flusses (3) umfasst;
    **dadurch gekennzeichnet, dass** zum Berechnen eines Indexes eines Bildes (6), insbesondere eines Referenzindexes (10) und/oder eines laufenden Indexes (14), es den Wiederabtastungsschritt zum Wiederabtasten des genannten Bildes (6) zu einem Bild mit den im Voraus festgelegten Dimensionen umfasst, wobei das genannte Wiederabgetastete Bild nachfolgend als genormtes Bild (16) bezeichnet ist,
    wobei, falls das genannte Bild (6) ein Farbbild mit Farbpegeln ist, das genannte Verfahren außerdem den Umsetzungsschritt zum vorherigen Umsetzen der genannten Farbpegel des genannten wiederabzutastenden Bildes (6) in Graupegel umfasst;
    wobei das genannte genormte Bild (16) durch eine Matrize (19) der Pixelwerte (17) nach diskreter Quantifizierung der genannten Pixelwerte dargestellt wird;
    wobei das genannte Verfahren außerdem die folgende Schritte umfasst:

    - den Anordnungsschritt zum Anordnen der genannten Werte nach einer vorausbestimmten Durchlaufordnung durch die Positionen (18) in der genannten Matrize (19), insbesondere unter Verkettung der genannten Werte jeder Linie in der genannten Matrize (19) in der Form eines charakteristischen Vektors (9), um den genannten Index zu erhalten.

    wobei das genannte Verfahren derart ausgebildet ist, dass aufgrund von der Ausbildung der genannten Indexe als beendete und geordnete Mengen (21a, 21b) von Werten, die im genannten Referenzindex (10) und im genannten laufenden Index (14) durch ein Koordinatensystem (22) identifiziert werden, es außerdem die folgende Schritte umfasst:

- den Definierungsschritt zum Definieren eines Wertpaars (25, 26), für eine bestimmte Koordinate (24) des Koordinatensystems (22):

• dessen erster Wert (25) der mit der genannten bestimmten Koordinate (24) verbundene Wert im Referenzindex (10) ist, und
• dessen zweiter Wert (26) der mit der genannten bestimmten Koordinate (24) verbundene Wert im laufenden Index (14) ist,

- den Berechnungsschritt zum Berechnen des zweidimensionalen Histogramms (27) der genannten Wertpaare (25, 26), die für alle Koordinaten des Koordinatensystems (22) für den Referenzindex (10) und den laufenden Index (14) erhalten wurden,
- den Berechnungsschritt zum Berechnen der diskreten Entropie des genannten zweidimensionalen Histogramms, nachfolgend als Entropie des zweidimensionalen Histogramms bezeichnet ist,
- den Berechnungsschritt zum Berechnen der diskreten Entropie der Verteilung der Werte des genannten Referenzindexes (10) oder des genannten laufenden Indexes (14); wobei die genannte Entropie nachfolgend als marginale Referenzentropie (50a) oder marginale laufende Entropie (50b) bezeichnet ist,

sodass die Vergleichszeit so optimiert wird;
sodass es so möglich ist, den genannten Index mit diesem marginalen Entropiewert zu ergänzen;

- den Berechnungsschritt zum Berechnen einer Vergleichsdistanz (29) zwischen einem Referenzindex (10) und einem laufenden Index (14) unter Bildung des Verhältnisses zwischen der um die Entropie des zweidimensionalen Histogramms (28) verminderten Summe der marginalen Referenzentropie (50a) und der laufenden marginalen Entropie (50b) am Zähler und der Summe der marginalen Referenzentropie (50a) und der marginalen laufenden Entropie (50b) am Nenner,

sodass das genannte Verfahren erlaubt, in einem Fluss (3) ein bestimmtes Bild (11) durch die genannte Vergleichsdistanz mit einer sehr großen Genauigkeit, auf sehr schneller Weise und mit einer großen Festigkeit gegen sehr große photometrische Veränderungen festzustellen.

2. Verfahren nach Anspruch 1, wobei das genannte Verfahren derart ausgebildet ist, dass zum Extrahieren der Referenzindexe (10) aus der genannte bestimmten audiovisuellen Sequenz (2) es außerdem die folgenden Schritte umfasst:

- den Initialisierungsschritt zum Initialisieren einer die genannten Referenzindexe (10) der genannten bestimmten Bilder (11) enthaltenen Referenzmenge (30) mit dem Referenzindex (100) des ersten bestimmten Bildes (110) der genannten bestimmten audiovisuellen Sequenz (2); wobei der genannte Referenzindex (100) des genannten ersten bestimmten Bildes (110) der genannten bestimmten audiovisuellen Sequenz (2) den ersten Referenzindex der genannten Referenzmenge (30) bildet;
wobei das genannte Verfahren außerdem umfasst:
- (a) den Berechnungsschritt zum Berechnen eines zeitweiligen laufenden Indexes (31) für jedes bestimmte Bild (11) der genannten bestimmten audiovisuellen Sequenz (2), und zum Berechnen einer Vergleichsdistanz (29) zwischen genanntem zeitweiligem laufendem Index (31) und letztem, zur genannten Referenzmenge (30) hinzugefügtem Referenzindex (32),
- (b) den Vergleichsschritt zum Vergleichen der genannten Vergleichsdistanz (29) zwischen genanntem zeitweiligem laufendem Index (31) und letztem, zur genannten Menge (30) hinzugefügtem Referenzindex (32) mit einer vorausbestimmten Schwelle SE (33);
- (c) den Hinzufügungsschritt zum Hinzufügen des genannten zeitweiligen laufenden Indexes (31) zur Referenzmenge (30), wenn die Vergleichsdistanz (29) die genannte vorausbestimmte Schwelle SE (33) überschreitet; wobei der genannte zeitweilige laufende Index (31) zum letzten Referenzindex (32) der genannten Referenzmenge (30) wird;
wobei das genannte Verfahren außerdem den Wiederholungsschritt zum Wiederholen der Schritte (a) bis (c) bis zum Ende der genannten bestimmte audiovisueller Sequenz (2) umfasst.

3. Verfahren nach Anspruch 1 oder 2, wobei das genannte Verfahren derart ausgebildet ist, dass zum Vergleichen des genannten Referenzindexes (10) mit dem laufenden Index (14) des laufenden Bildes (13) des beobachteten Flusses (3) es außerdem den Vergleichsschritt zum Vergleichen der genannten Vergleichsdistanz (29) mit einer vorausbestimmten Schwelle SF (65) umfasst;

sodass im Falle eines beliebigen Flusses (3) von Bildern (6) das genannte bestimmte Bild (11) unter der Bedingung festgestellt wird, dass die genannte Vergleichsdistanz (29) zwischen dem Referenzindex (10) des genannten bestimmten Bildes (11) und dem laufenden Index (14) niedriger als die vorausbestimmte Schwelle SF (65) ist.

4. Verfahren nach Anspruch 2, wobei das genannte Verfahren mehr besonders für die Feststellung einer bestimmten audiovisuellen Sequenz (2) in einem beliebigen Fluss (3) von audiovisuellen Sequenzen (7) ausgelegt ist; wobei das genannte Verfahren die folgenden Schritte umfasst:

- (a) den Initialisierungsschritt zum Initialisieren einer Variable T (34) mit -1, und den Initialisierungsschritt zum Initialisieren einer Variable D (35) mit 0,
- (b) den Berechnungsschritt zum berechnen der genannten Vergleichsdistanz (29) zwischen genanntem Referenzindex (10) der genannten Referenzmenge (30) und laufendem Index (14) für jeden Referenzindex (10) der genannten Referenzmenge (30), sodass die genannte Variable D (35) mit eins inkrementiert wird, wenn die genannte Vergleichsdistanz (29) niedriger als eine vorausbestimmte Schwelle SD (59) ist; wobei die genannte Bedingung nachfolgend als Feststellungsbedingung für den Referenzindex (10) bezeichnet ist;
wobei das Verfahren derart ausgebildet ist, dass der Zeitpunkt, als der erste Referenzindex (10) der genannten Referenzmenge (30) der genannten bestimmten audiovisuellen Sequenz (2) der genannten Feststellungsbedingung genügt, als Zeitpunkt der ersten Feststellung bezeichnet ist;
wobei das Verfahren außerdem die folgende Schritte umfasst:
- (c) den Zuweisungsschritt zum Zuweisen des Zeitabschnitts von der genannten Zeitpunkt der ersten Feststellung an der genannte Variable T (34), wenn die Variable D (35) anders als null ist,
- (d) den Wiederholungsschritt zum Wiederholen des Schrittes (b), bis die genannte Variable D (35) die genannte vorausbestimmte Schwelle SD (59) erreicht, oder zum Wiederholen des Schrittes (a), wenn die genannte Variable T (34) eine vorausbestimmte Schwelle ST (60) überschreitet,
- (e) die Feststellungsschritt zum Feststellen der genannten bestimmten audiovisuellen Sequenz (2), wenn die Variable D (35) die genannte vorausbestimmte Schwelle SD (59) erreicht.

5. System zum Identifizieren eines bestimmten Bildes (11) und/oder einer bestimmten audiovisuellen Sequenz (2) in einem beliebigen Fluss (3) von Bildern (6) oder von audiovisuellen Sequenzen (7), insbesondere zur Identifizieren eines proprietären Bildes (4) im genannten Fluss (3) und/oder zur Identifizieren, vorzugsweise in Echtzeit, von mehreren proprietären audiovisuellen Sequenzen (5) im genannten Fluss (3);
wobei das genannte System **dadurch gekennzeichnet, dass** es umfasst:

- erste Berechnungsmittel (38) zum Berechnen eines Referenzindexes (10) für das genannte bestimmte Bild (11) unter Implementierung eines Indexierungsprozesses (39), oder
- erste Datenanalysemittel (40) zum Extrahieren von Referenzindexen (10) aus der bestimmten audiovisuellen Sequenz (2), um eine Referenzmenge (30) der Referenzindexe (10) zu bilden;
- wobei die genannten ersten Berechnungsmittel (38) zum Berechnen eines Referenzindexes (10) eines bestimmten Bildes (11) umfassen:
- Abtastungsmittel (45) zum Wiederabtasten des genannten bestimmten Bildes (11) zu einem bestimmten wiederabgetasteten Bild mit den im Voraus festgelegten Dimensionen,
- diskrete Quantifizierungsmittel (46) zur diskreten Quantifizieren der Pixelwerte des bestimmten wiederabgetasteten Bildes (11), sodass das genannte bestimmte wiederabgetastete Bild (11) durch eine Matrize (19) der Pixelwerte (17) nach diskreter Quantifizierung dargestellt wird;
- Anordnungsmittel (47) zum Anordnen der genannten Pixelwerte (17) nach einer vorausbestimmten Durchlaufordnung durch die Positionen (18) in der genannten Matrize (19), insbesondere unter Verkettung der genannten Werte jeder Linie der genannten Matrize (19) in der Form eines charakteristischen Vektors (9a), um den genannten Referenzindex (10) zu erhalten;

wobei, falls das genannte bestimmte Bild (11) ein Farbbild (6) mit Farbpegeln ist, das genannte System außerdem Umstellungsmittel (48) zum vorherigen Umsetzen der genannten Farbpegel des genannten bestimmten wiederabzutastenden Bildes (11) in Graupegel umfasst;
wobei das genannte System außerdem umfasst:

- Empfangsmittel (41) zum Empfangen des genannten Flusses (3) von Bildern (6) oder von audiovisuellen Sequenzen (7) mit wenigstens einem bestimmten Bild (11) und/oder wenigstens einer bestimmten audiovisuellen Sequenz (2),
- Datenverarbeitungsmittel (42) zum Digitalisieren des genannten Flusses (3) von Bildern (6) oder von audiovisuellen Sequenzen (7);

wobei das genannte System außerdem **dadurch gekennzeichnet, dass** der genannte Referenzindex (10) als beendete und geordnete Mengen (21a) von Werten (20a), insbesondere als charakteristischer, den Inhalt des bestimmten Bildes (11) kodierender Vektor (9a), ausgebildet ist,
sodass ein Referenzindex (10) so erhalten wird, der für das bestimmte Bild (11) und/oder für die bestimmte audiovisuelle Sequenz (2) charakteristisch ist;
wobei das genannte System außerdem umfasst:

- zweite Berechnungsmittel (43) zum Berechnen eines laufenden Indexes (14) für laufende Bilder (13) des genannten Flusses (3) unter Implementierung des genannten Indexierungsprozesses (39) für die genannten laufenden Bilder (13) des genannten Flusses (3); wobei die genannte zweite Berechnungsmittel (43) zum Berechnen eines laufenden Indexes (14) eines laufenden Bildes (13) umfasst:
- Abtastungsmittel (45) zum Wiederabtasten des genannten laufenden Bildes (13) zu einem laufenden Bild (13) mit den im Voraus festgelegten Dimensionen,
- diskrete Quantifizierungsmittel (46) zum diskreten Quantifizieren der Pixelwerte des genannten laufenden Bildes (13), sodass das genannte wiederabgetastete laufende Bild (13) durch eine Matrize (19) der Pixelwerte (17) nach diskreter Quantifizierung dargestellt wird;
- Anordnungsmittel (47) zum Anordnen der genannten Pixelwerte nach einer vorausbestimmten Durchlaufordnung durch die Positionen (18) in der genannten Matrize (19), insbesondere unter Verkettung der genannten Werte jeder Linie der genannten Matrize (19) in der Form eines charakteristischen Vektors (9b), um den genannten laufenden Index (14) zu erhalten;

wobei, falls das genannte laufende Bild (13) ein Farbbild (6) mit Farbpegeln ist, das genannte System außerdem Umstellungsmittel (48) zum vorherigen Umsetzen der genannten Farbpegel des genannten wiederabzutastenden laufenden Bildes (11) in Graupegel umfasst;
wobei der laufende Index (14) als beendete und geordnete Wertmenge (21b), insbesondere als charakteristischer, den Inhalt des laufenden Bildes (13) kodierender Vektor (9b), ausgebildet ist;
wobei das genannte System außerdem umfasst:

- Vergleichsmittel (44) zum Vergleichen des genannten Referenzindexes (10) des genannten bestimmten Bildes (11) mit dem laufenden Index (14) des laufenden Bildes (13) des beobachteten Flusses (3);
- die genannten ersten Berechnungsmittel (38), die außerdem Referenzverarbeitungsmittel (49a) zum Berechnen der diskreten Entropie der Verteilung der Werte des Referenzindexes (10) umfassen; wobei die genannte Entropie nachfolgend als marginale Referenzentropie (50a) bezeichnet ist:

sodass die Vergleichszeit so optimiert wird;
sodass der genannte Referenzindex (10) mit diesem Wert der marginalen Referenzentropie (50a) ergänzt werden kann,

- die zweiten Berechnungsmittel (43), die außerdem laufende Verarbeitungsmittel (49b) zum Berechnen der diskrete Entropie der Verteilung der Werte des laufenden Indexes (14) umfassen; wobei die genannte Entropie nachfolgend als marginale laufende Entropie (50b) bezeichnet ist;

sodass die Vergleichszeit so optimiert wird;
sodass der genannte laufende Index (14) mit diesem Wert der laufenden Entropie ergänzt werden kann,
wobei das genannte System derart ausgebildet ist, dass aufgrund von der Ausbildung der genannten Referenzindexe (10) und der genannten laufenden Indexe (14) als beendete und geordnete Mengen (21 a, 21 b) von Werten, die im genannten Referenzindex (10) und im genannten laufenden Index (14) durch ein Koordinatensystem (22) identifiziert werden:

es außerdem dritte Berechnungsmittel (52) umfasst:

- zum Definieren eines Wertpaares (25, 26) für eine bestimmte Koordinate (24) des Koordinatensystems (22), dessen erster Wert (25) der mit der genannten bestimmten Koordinate (24) verbundene Wert im Referenzindex (10) ist, und dessen zweiter Wert (26) der mit den genannten bestimmten Koordinate (24) verbundene Wert im laufenden Index (14) ist,

- zum Berechnen des zweidimensionales Histogramms (27) der genannten Wertpaare (25, 26), die für alle Koordinaten des Koordinatensystems (22) des Referenzindexes (10) und des laufenden Indexes (14) erhalten wurden,

- zum Berechnen der diskreten Entropie des genannten zweidimensionalen Histogramms, nachfolgend als Entropie des zweidimensionalen Histogramms (28) bezeichnet,

- zum Berechnen einer Vergleichsdistanz (29) zwischen einem Referenzindex (10) und einem laufenden Index (14) unter Bildung eines Verhältnis zwischen der um die Entropie des zweidimensionalen Histogramms (28) verminderten Summe der marginalen Referenzentropie (50a) und der marginalen laufenden Entropie (50b) am Zähler und der Summe der marginalen Referenzentropie (50a) und der marginalen laufenden Entropie (50b) am Nenner,

- zum Feststellen eines bestimmtes Bildes (11) in einem Fluss (3) durch die genannte Vergleichsdistanz mit einer sehr großen Genauigkeit, auf sehr schneller Weise und mit einer großen Festigkeit gegen sehr große photometrische Veränderungen.

6. System nach Anspruch 5, wobei das genannte System derart ausgebildet ist, dass zum Extrahieren der Referenzindexe (10) aus der bestimmten audiovisuellen Sequenz (2), die aus bestimmten Bildern (11) besteht, es außerdem vierte Berechnungsmittel (53) zum Implementieren eines Berechnungsalgorithmus (54) umfasst, der einen Initialisierungsschritt zum Initialisieren einer die genannten Referenzindexe 10) der genannten bestimmten Bilder (11) enthaltenen Referenzmenge (30) mit dem Referenzindex (100) des ersten bestimmten Bildes (110) der genannten bestimmten audiovisuellen Sequenz (2) umfasst; wobei der genannte Referenzindex (100) des genannten ersten bestimmten Bildes (110) der genannten bestimmten audiovisuellen Sequenz (2) das erste Referenzindex der Referenzmenge (30) bildet;

wobei der genannte Berechnungsalgorithmus (54) außerdem umfasst:

- (a) den Berechnungsschritt zum Berechnen eines zeitweiligen laufenden Indexes (31) für jedes bestimmte Bild (11) der genannten bestimmten audiovisuellen Sequenz (2), und zum Berechnen einer Vergleichsdistanz (29) zwischen genanntem zeitweiligem laufendem Index (31) und letztem, zur genannten Referenzmenge (30) hinzugefügtem Referenzindex (32);

- (b) den Vergleichsschritt zum Vergleichen der genannten Vergleichsdistanz (29) zwischen genanntem zeitweiligem laufendem Index (31) und letztem, zur genannten Referenzmenge (30) hinzugefügtem Referenzindex (32) mit einer vorausbestimmten Schwelle (33);

- (c) den Hinzufügungsschritt zum Hinzufügen des genannten zeitweiligen laufenden Indexes (31) zur genannten Referenzmenge (30), wenn die Vergleichsdistanz (29) die genannte vorausbestimmte Schwelle SE (33) überschreitet; wobei der zeitweilige laufende Index (31) zum letzten Referenzindex (32) der genannten Referenzmenge (30) wird;

wobei der genannte Berechnungsalgorithmus (54) außerdem den Wiederholungsschritt zum Wiederholen der Schritte (a) bis (c) bis zum Ende der genannten bestimmten audiovisuellen Sequenz (2) umfasst.

7. System nach Anspruch 5, wobei das genannte System derart ausgebildet ist, dass die genannten dritte Berechnungsmittel (52) mit einer vorausbestimmten Schwelle SF (65) die genannte Vergleichsdistanz (29) zwischen genannten Referenzindexen (10) und laufendem Index (14) des laufenden Bildes (13) des beobachteten Flusses (3) vergleichen,

sodass im Falle beliebiges Flusses (3) von Bildern (6) das genannte bestimmte Bild (11) unter der Bedingung festgestellt wird, dass die genannte Vergleichsdistanz (29) zwischen dem Referenzindex (10) des genannten bestimmten Bildes (11) und dem laufenden Index (14) niedriger als die vorausbestimmte Schwelle SF (65) ist.

8. System nach Anspruch 6, wobei das genannte System mehr besonders für die Feststellung einer bestimmten audiovisuellen Sequenz (2) in einem beliebigen Fluss (3) von audiovisuellen Sequenzen (7) ausgelegt wird;

wobei das genannte System Initialisierungsmittel zum Beladen:

des Werts -1 in einen ersten Register T (55), und
des Werts 0 in einen zweiten Register D (56), umfasst;
wobei das genannte System außerdem fünfte Berechnungsmittel (58) zum Berechnen der genannten Vergleichsdistanz (29) zwischen genanntem Referenzindex (10) der genannten Referenzmenge (30) und laufendem Index (14) für jeden Referenzindex (10) der genannten Referenzmenge (30) umfasst, sodass der zweite Register D (56) mit eins inkrementiert wird, wenn die genannte Vergleichsdistanz (29) niedriger als eine vorausbestimmte Schwelle SD (59) ist; wobei die genannte Bedingung nachfolgend als Feststellungsbedingung für den Referenzindex (10) bezeichnet ist;

wobei das System derart ausgebildet ist, dass der Zeitpunkt, als der erste Referenzindex (10) der genannten Referenzmenge (30) der genannten bestimmten audiovisuellen Sequenz (2) der genannten Feststellungsbedingung genügt, nachfolgend als Zeitpunkt der ersten Feststellung bezeichnet ist;

wobei die genannten fünften Berechnungsmittel (58) zum Beladen des Zeitabschnitts von der genannten Zeitpunkt der ersten Feststellung an in den genannten ersten Register T (55) angeordnet sind, wenn der Wert im genannten zweiten Register D (56) anders als null ist,

wobei die genannten fünften Berechnungsmittel (58) angeordnet ist, um die genannte Berechnung der genannten Vergleichsdistanz (29) zu wiederholen, bis der Wert im genannten zweiten Register D (56) die genannte vorausbestimmte Schwelle SD (59) erreicht, oder um die Implementierung der genannten Initialisierungsmittel (57) zu wiederholen, wenn der Wert im ersten Register T (55) eine vorausbestimmte Schwelle ST (60) überschreitet,

sodass die genannte bestimmte audiovisuelle Sequenz (2) festgestellt wird, wenn der Wert im genannten zweiten Register D (56) die genannte vorausbestimmte Schwelle SD (59) erreicht.

EP 1 532 550 B1

FIG_1

6

4

11

3

FIG_2

11

38

10

39

FIG_3

10

21a

20a

9a

42

43

39

10

44

3

3

11

13

6

41

FIG_4

14

21b

20b

20b

9b

FIG_5

FIG_7

FIG_6

FIG_8

EP 1 532 550 B1

FIG_9

## FIG_10

EP 1 532 550 B1

21a 24

22

20a 25

10

21a

**FIG_11**

22 21b

20b 24 26

14

21b

10 21a

11 21b

52

27

28

50a

50b

29 65

**FIG_12**

EP 1 532 550 B1

32

FIG_13

# FIG_14

# FIG_15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0878767 A